# EUROPÄISCHE PATENTSCHRIFT

(11) **EP 0 519 096 B1**
(45) Veröffentlichungstag und Bekanntmachung des Hinweises auf die Patenterteilung: **28.08.1996**
(21) Anmeldenummer: 91109977.8
(22) Anmeldetag: 18.06.1991
(51) Int. Cl.: G06F 9/44, G06F 11/22

(54) **Wissensbasiertes Diagnosesystem mit graphischer Wissensakquisitionskomponente**
Knowledge based diagnostic system with graphical knowledge-acquisition element
Système diagnostique basé sur la connaissance avec un élément graphique pour l'acquisition des règles

(43) Veröffentlichungstag der Anmeldung: 23.12.1992
(73) Patentinhaber: SIEMENS AKTIENGESELLSCHAFT, 80333 München (DE)
(72) Erfinder: Schmiedel, Gabriele, Dipl.-Inform., W-8151 Warngau (DE)

(56) Entgegenhaltungen:
- PROCEEDINGS IEEE/AIAA/NASA 9TH DIGITAL AVIONICS SYSTEMS CONFERENCE 18. Oktober 1990, VIRGINIA BEACH, VA, U.S.A. Seiten 480-487; F.A. PATTERSON-HINE ET AL.: 'An integrated approach to system design, reliability, and diagnosis'
- WINTER SIMULATION CONFERENCE PROCEEDINGS 16. Dezember 1987, THE RITZ- CARLTON, BUCKHEAD, ATLANTA Seiten 518-524; M. PAZIRANDEH ET AL.: 'Object oriented performance models with knowledge-based diagnostics'
- ELEKTROTECHNIK Bd. 70, Nr. 4, 22. März 1988, WÜRZBURG, W. GERMANY, Seiten 23-25; ASEA BROWN BOVERI CORPORATION: 'Zoomt zum Fehlerort'

## Beschreibung

Wissensbasierte Systeme sind ein Teil der sog. künstlichen Intelligenz der im Vergleich mit anderen Teilgebieten dieses Zweiges der Informatik bisher am weitesten den Einzug in die praktischen Anwendungen und damit in die Industrie geschafft hat. Eine wichtige Anwendung der wissensbasierten Systeme sind die sog. wissensbasierten Diagnosesysteme, z.B. zur Diagnose von Defekten an technischen Systemen. Solche Diagnosen werden zur Instandsetzung komplexer technischer Systeme durch Nichtexperten benötigt.

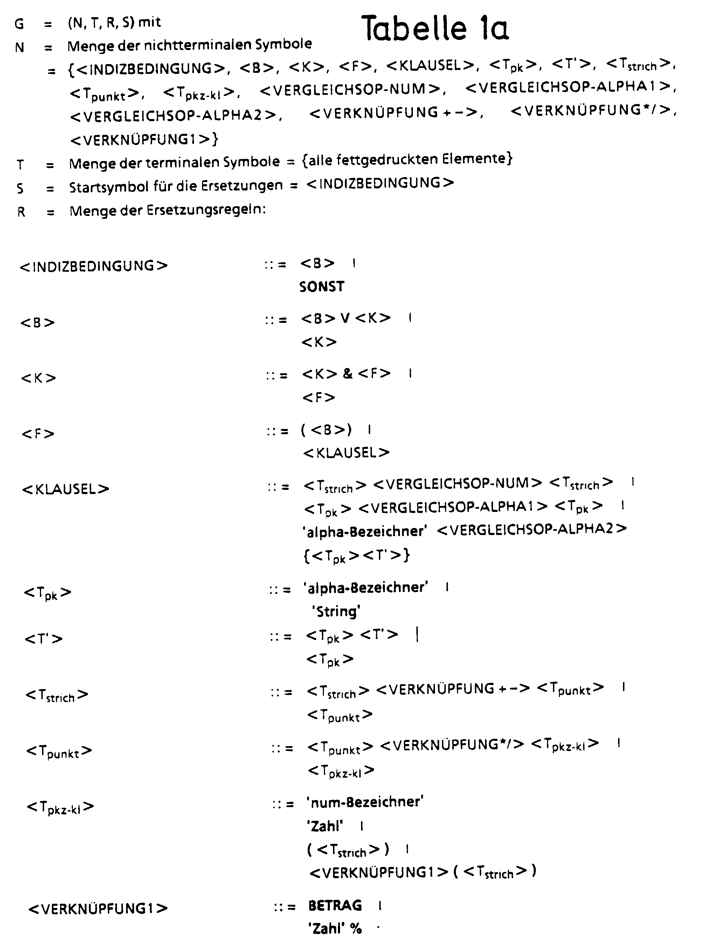

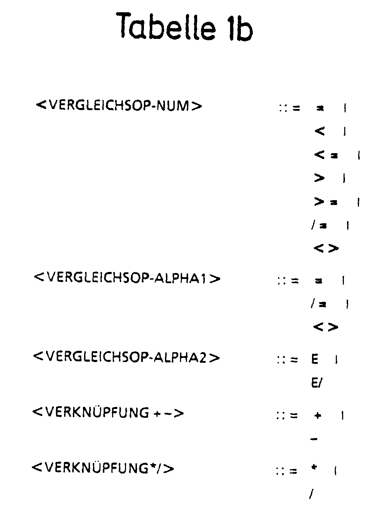

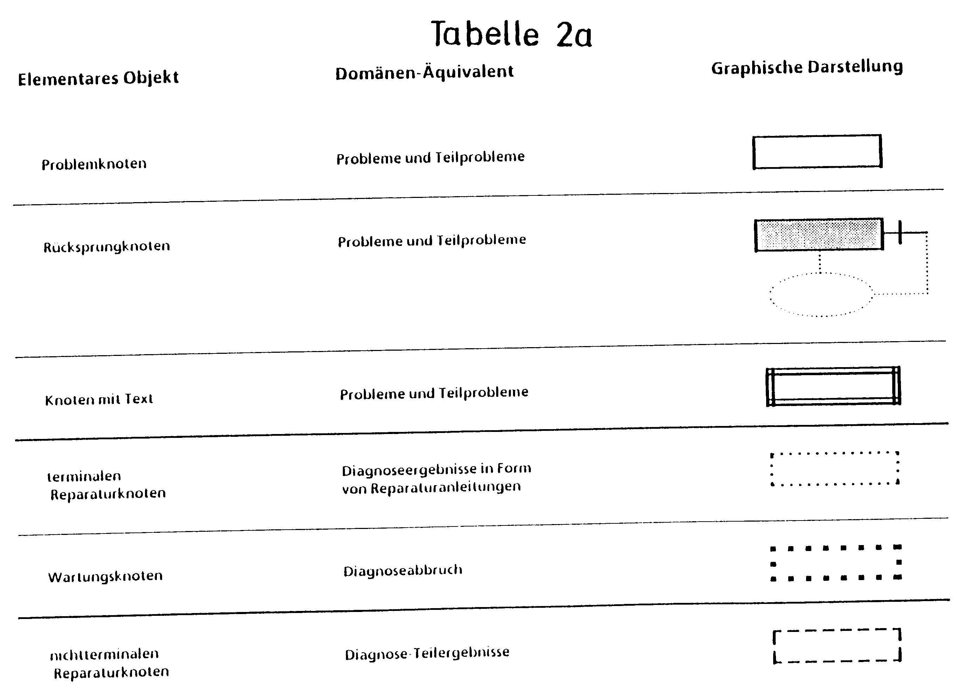

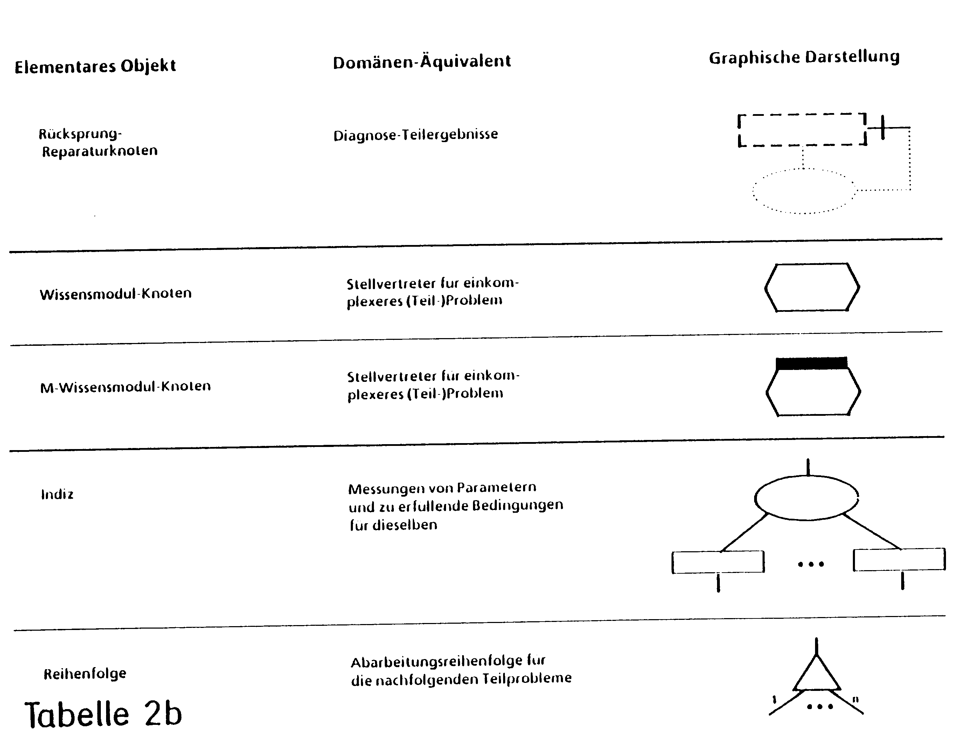

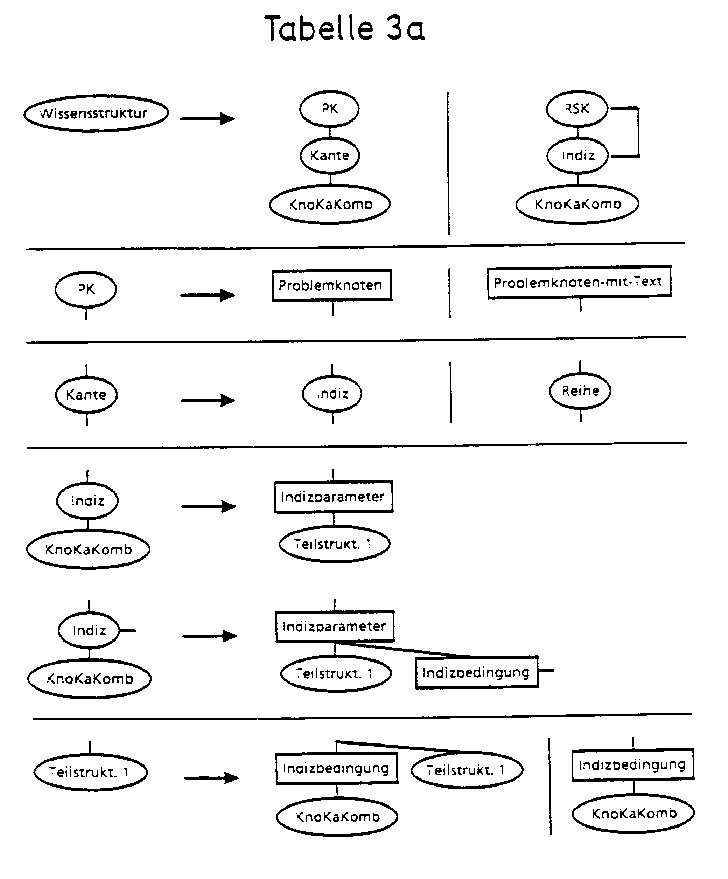

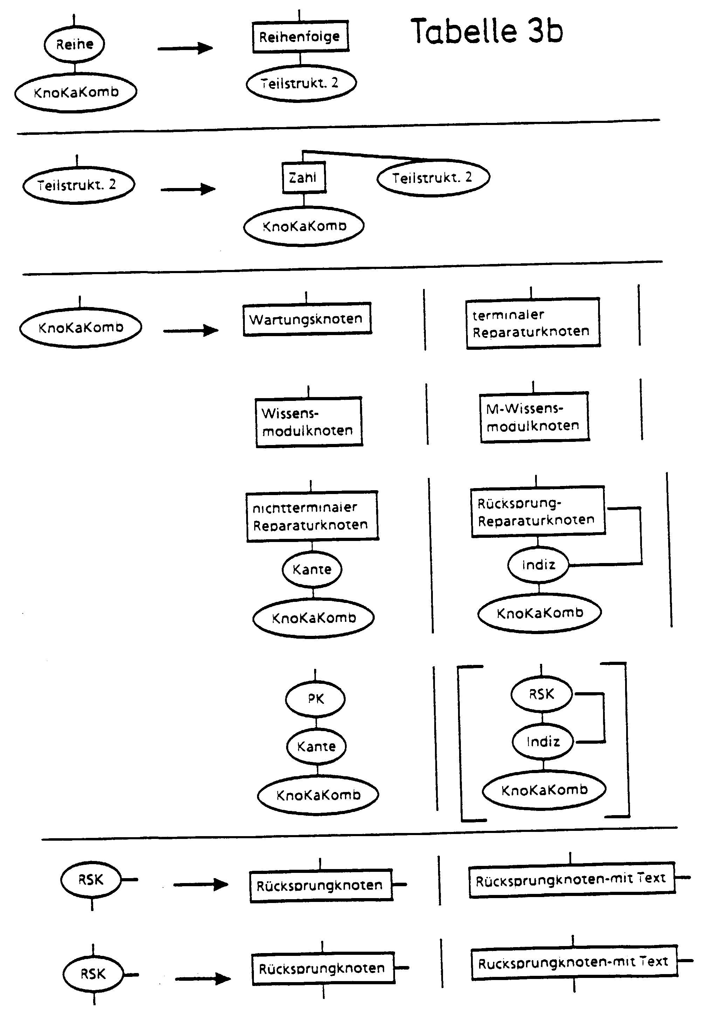

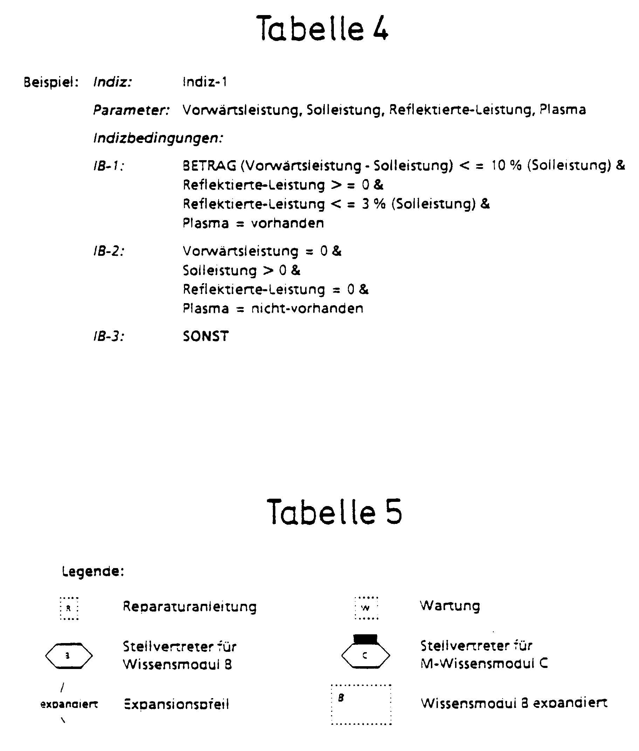

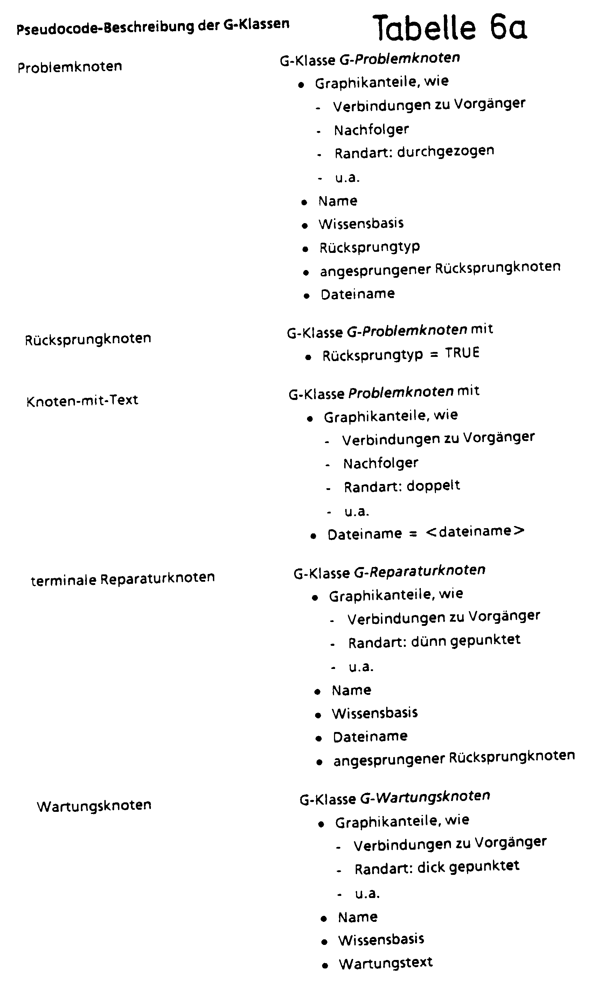

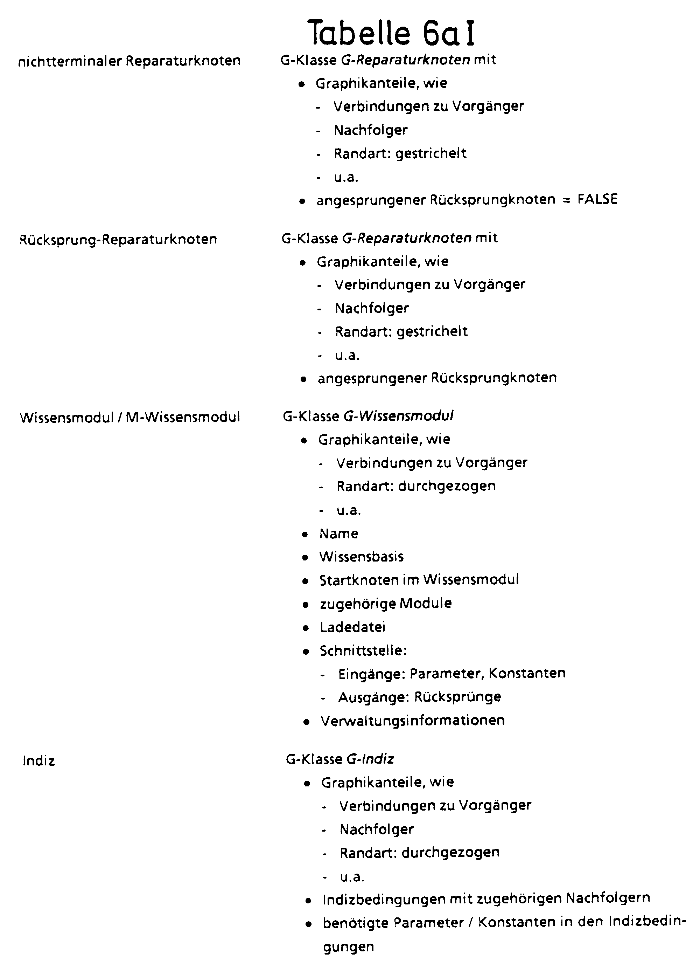

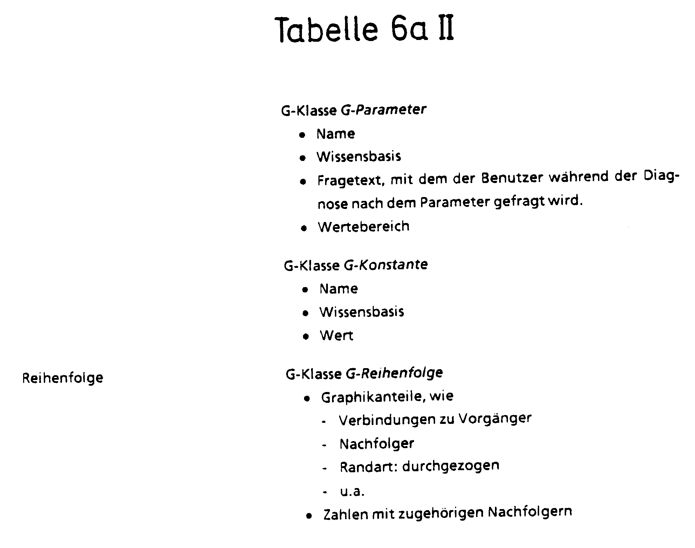

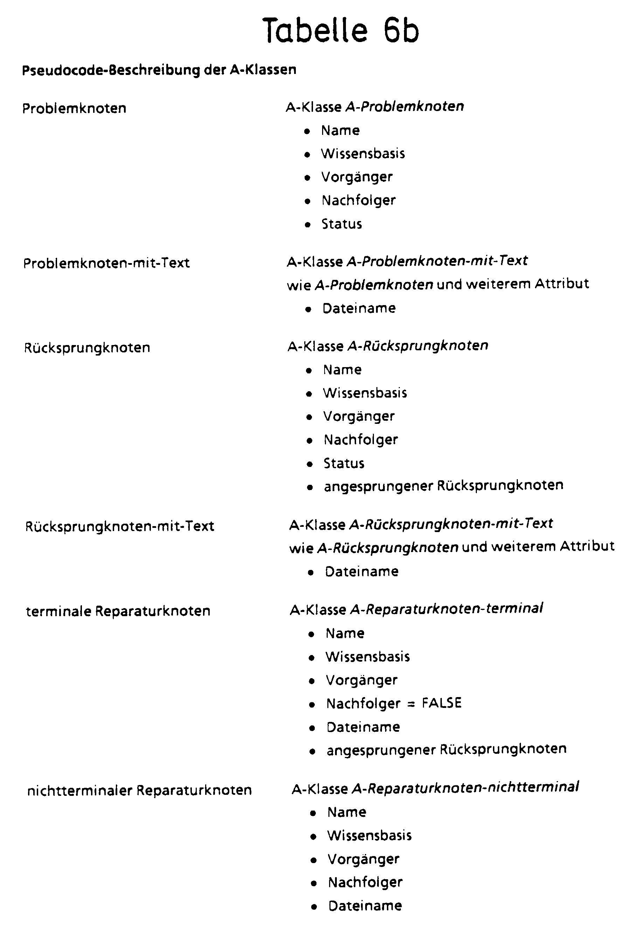

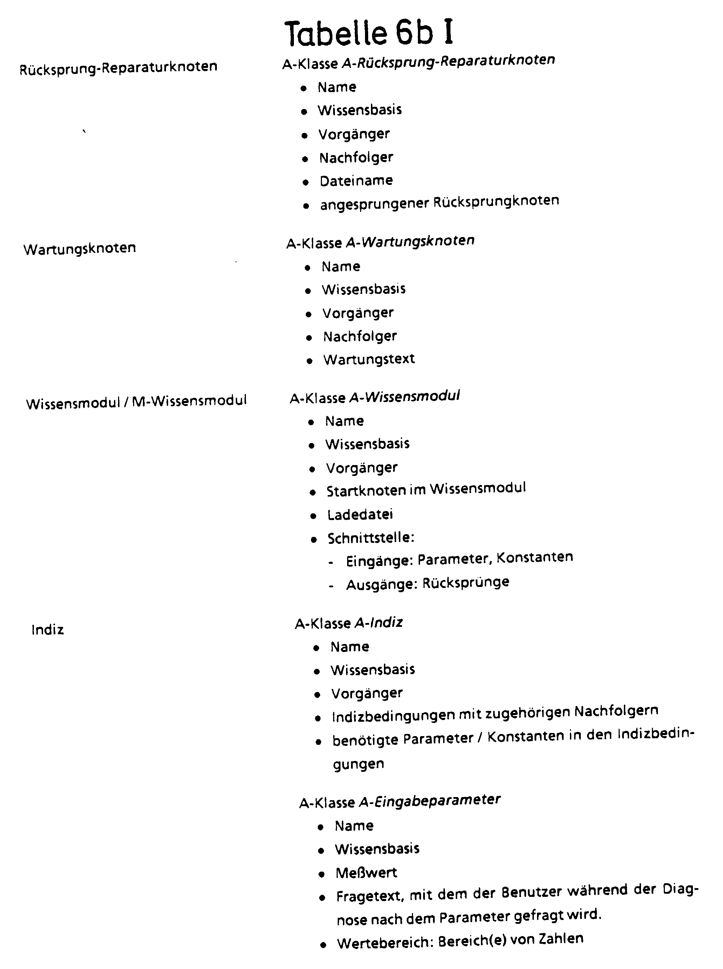

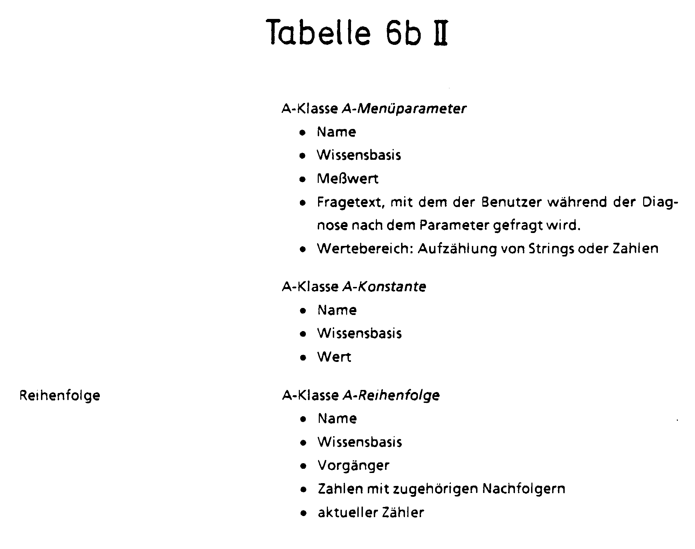

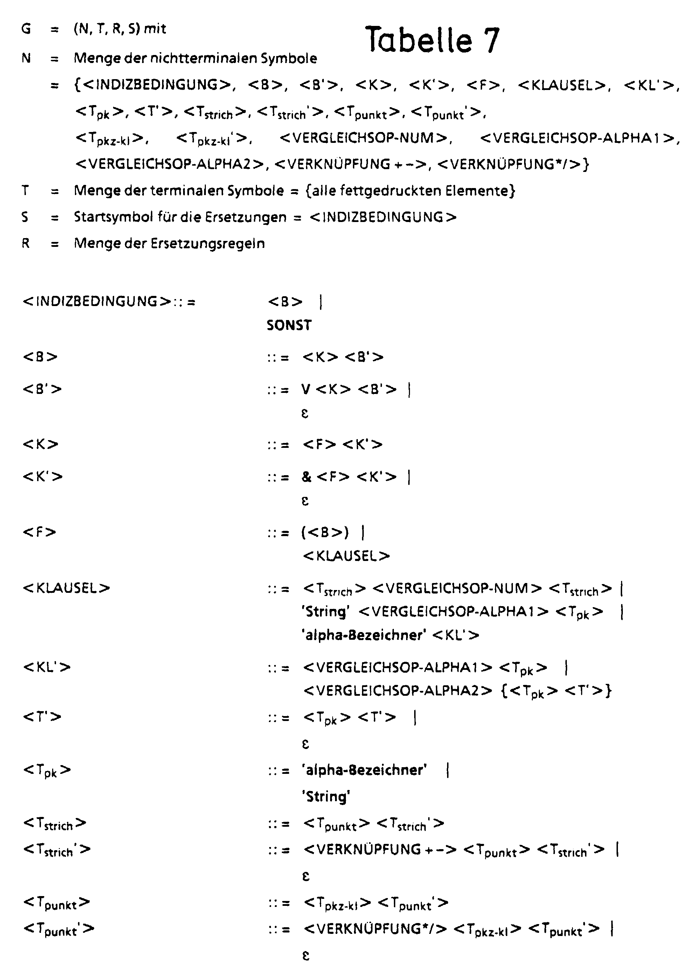

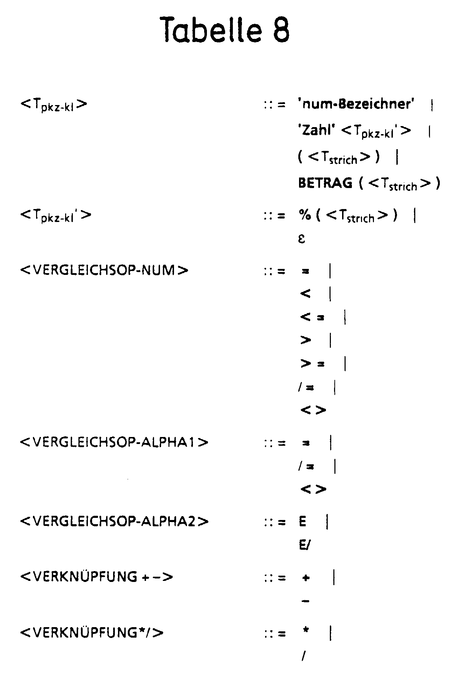

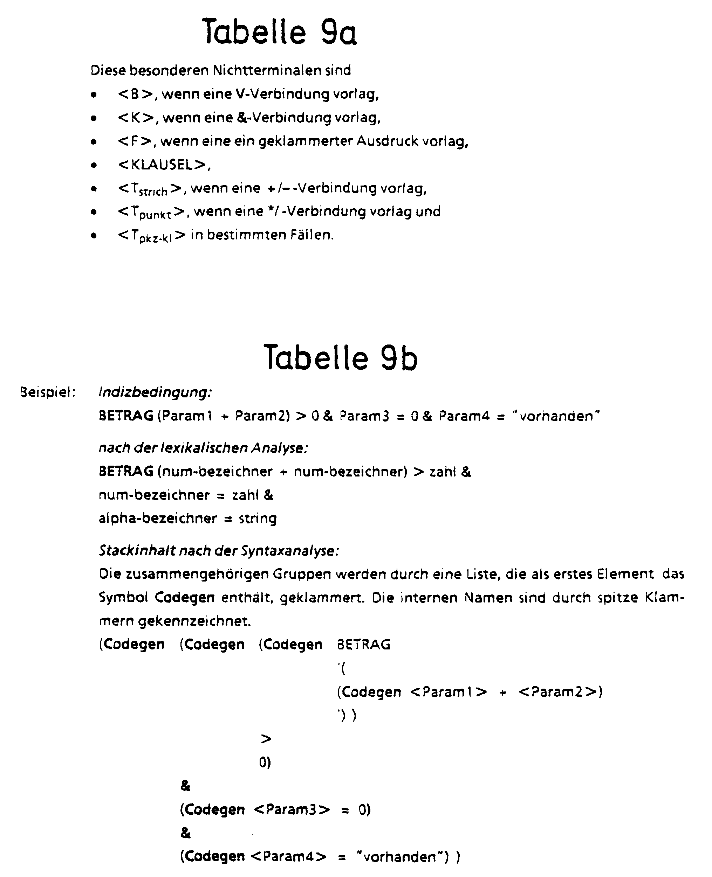

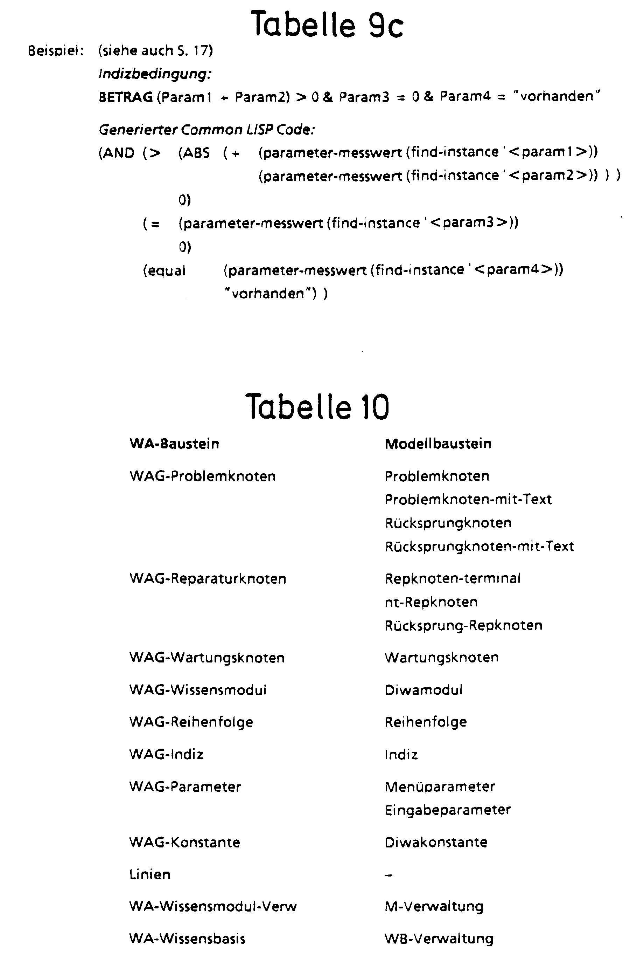

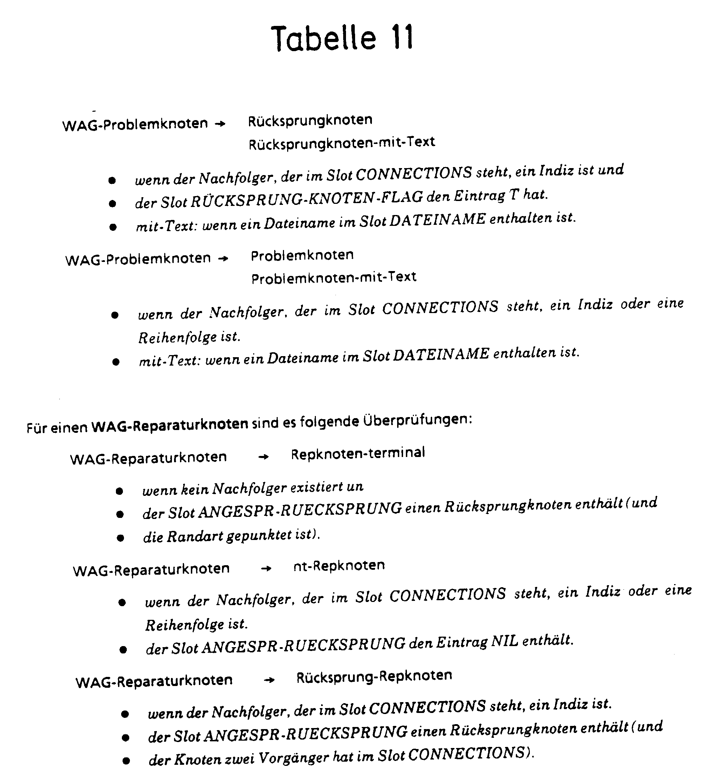

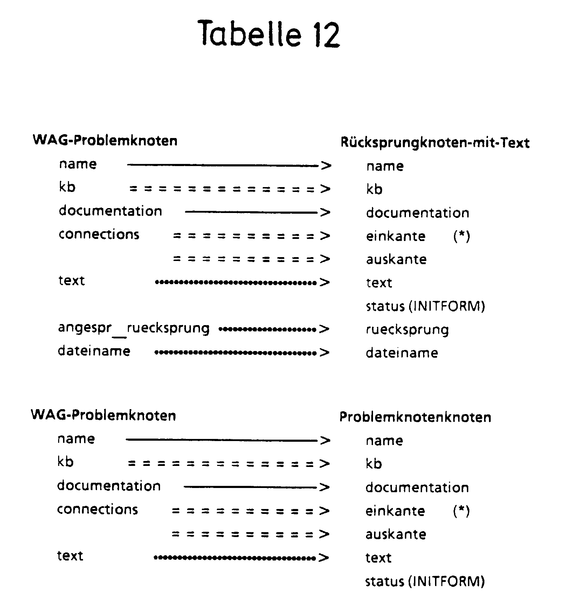

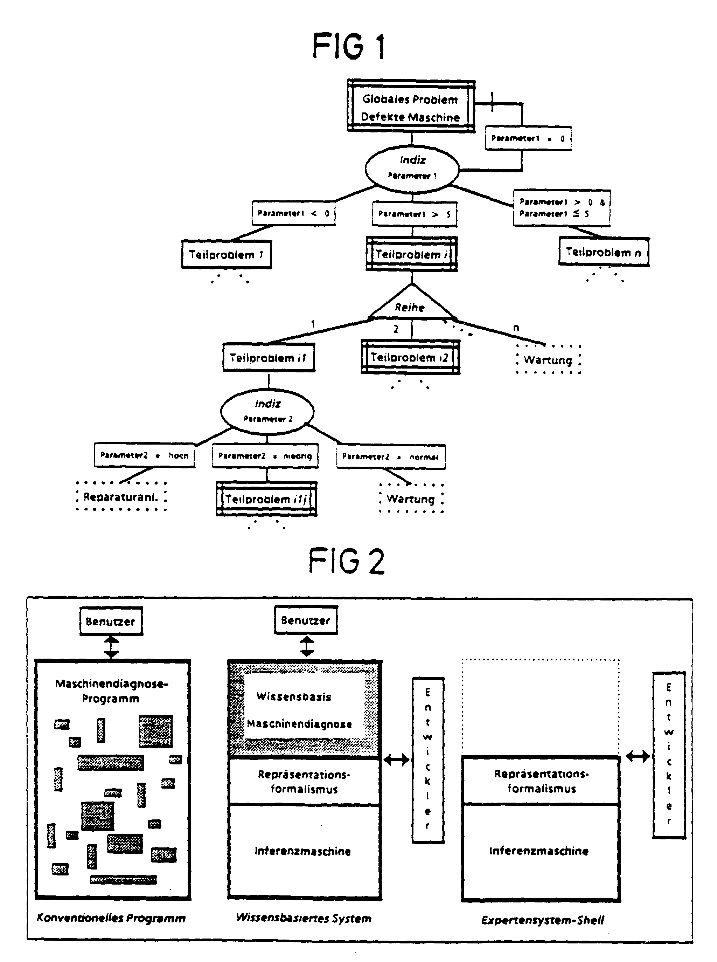

Ein wissensbasiertes Diagnosesystem oder ein Expertensystem zur Diagnose dient dem Anwender zur Fehlerlokalisierung mit einer Anleitung zur Fehlerbeseitigung sowie der Kontrolle, ob ein aufgetretener Fehler tatsächlich behoben ist. Wissensbasierte Systeme unterscheiden sich von konventionellen Softwaresystemen hauptsächlich durch ihre spezielle Architektur. Die Architektur wissensbasierter Systeme ermöglicht es im Gegensatz zu der Architektur konventioneller Softwaresysteme, daß das Anwendungswissen, d.h. das Wissen über eine spezielle Domäne explizit und vom Wissen über die Abarbeitung des Anwendungswissens getrennt repräsentiert werden kann. In konventionellen, nicht wissensbasierten Systemen wird Wissen dagegen verteilt, d.h. mit algorithmischen Elementen vermischt repräsentiert. Figur 2 zeigt die Unterschiede zwischen einem konventionellen Programm zur Maschinendiagnose und einem wissensbasierten System zur Maschinendiagnose zusammen mit einer Gegenüberstellung einer sog. Expertensystemshell in schematischer Weise. Bei einem konventionellen Programm zur Maschinendiagnose ist das Anwendungswissen (in der Figur 2 schattiert dargestellt) mit algorithmischen Elementen, d.h. mit Elementen welche die Abarbeitung des Anwendungswissens darstellen, vermischt und nicht von diesem getrennt. Bei wissensbasierten Systemen liegt eine strikte Trennung der für ein wissensbasiertes System grundlegenden Komponenten: Inferenzmaschine, Repräsentationsformalismus und Wissensbasis vor. Der Vorteil dieser Trennung zwischen Wissensbasis und dem Wissen über die Abarbeitung des Anwendungswissens (Inferenzmaschine) wird deutlich, wenn man dem wissensbasierten System die sog. Expertensystemshell gegenüberstellt. Figur 2 zeigt die Expertensystemshell in schematischer Weise. Danach ist eine Expertensystemshell ein wissensbasiertes System ohne Wissensbasis. Die Expertensystemshell nimmt daher keinen Bezug auf eine spezielle Domäne und beinhaltet lediglich Wissen über die Abarbeitung eines irgendwie gearteten Anwendungswissens aus einer grundsätzlich beliebigen Domäne.

Neben der expliziten Darstellung des enthaltenen Wissens hat diese Architektur wissensbasierter Systeme den Vorteil, daß für eine weitere, ähnliche Anwendung, z.B. die Diagnose einer anderen Maschine, nur das Anwendungswissen neu implementiert werden muß und daß die Pflege und Erweiterung des im System enthaltenen Wissens einfacher vorzunehmen sind als bei konventionellen Programmen.

Ein wissensbasiertes System besteht dabei aus mindestens drei Komponenten:
- einem Repräsentationsformalismus für das Wissen (Regel und Fakten, logische Formeln, Objekte, usw.),
- einem Interpretationsalgorithmus, der zum Repräsentationsformalismus führt (Regelinterpreter, Theorembeweiser, Methoden usw.) und
- einer Wissensbasis, die Wissen in Form des Repräsentationsformalismus enthält.

Die Entwicklung, Pflege und Erweiterung eines wissensbasierten Diagnosesystems ist ein zeitaufwendiges und komplexes Problem. Zur Entwicklung eines wissensbasierten Diagnosesystems für die Diagnose von Fehlern einer komplexen Maschine gibt es prinzipiell verschiedene Vorgehensweisen.

Bei der traditionellen Entwicklung eines wissensbasierten Systems wird der Experte, d.h. derjenige Fachmann, welcher über das domänenspezifische Anwendungswissen verfügt, dessen Wissen und Erfahrung über die zu diagnostizierende Maschine und über das Vorgehen bei der Diagnose Gegenstand der Wissensbasis sein soll, von einem sog. Wissensingenieur befragt. Dieser ist nicht selbst Experte auf der infrage stehenden Domäne, sondern ein Fachmann auf dem Gebiet der Wissensakquisition. Er soll also das Wissen, über welches der Experte verfügt, in eine strukturierte, anschließend maschinell verarbeitbare Form bringen. Wesentliche Aufgaben des Wissensingenieurs sind:
- die intuitiven Handlungen und das darin implizit enthaltene Wissen explizit zu machen und
- das beim Experten vorhandene Wissen, das in irgendeiner, nicht näher beschriebenen Form vorliegt, in eine strukturierte Form zu bringen.

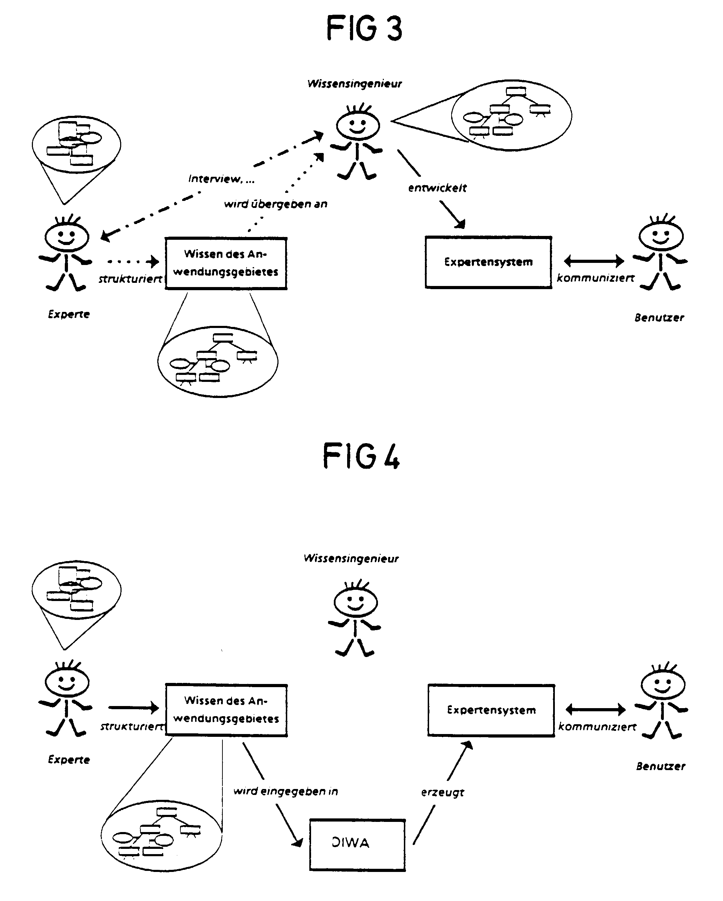

Der Wissensingenieur entwickelt bei der traditionellen Entwicklung anschließend aus dem so strukturierten Wissen ein wissensbasiertes System, indem er das strukturierte Wissen in einen geeigneten Repräsentationsformalismus, z.B. in Regeln einer Expertensystem-Shell, übersetzt. Dieser traditionelle Weg ist in Figur 3 skizziert. Bei diesem traditionellen Weg wird die Pflege und Erweiterung des wissensbasierten Diagnosesystems vom Wissensingenieur selbst vorgenommen.

Die Interaktion zwischen dem Experten und dem Wissensingenieur wirft folgende Probleme auf:
- zum einen ist erforderlich, daß der Wissensingenieur in gewissem Grade über Anwendungsverständnis verfügt, wodurch die eigentlich strikte Trennung zwischen dem Experten und dem Wissensingenieur partiell aufgeweicht wird.
- Die Durchführung der Wissensakquisition durch den Wissensingenieur ist sehr zeitintensiv und
- sehr fehleranfällig.

Proceedings IEEE/AIAA/NASA 9th Digital Avionics Systems Conference, 18. Oktober 1990, Virginia Beach, USA, Seiten 480-487, beschreibt ein wissensbasiertes Diagnosesystem zur automatisch ablaufenden Fehlerdiagnose in einem technischen Sytem. Die Implementierung der Wissensbasis mittels "wenn-dann" Regeln wird ersetzt durch einen objekt-orientierten Fehlerbaum, der graphisch dargestellt wird. Es ist ein graphischer Baumeditor vorhanden. Indes befaßt sich das genannte Dokument nicht mit dem Problem einer automatischen Überprüfung der eingegebenen graphischen Objekte und deren Verbindungen zur Eingabezeit.

Es ist daher ein wichtiges Ziel der Weiterentwicklung wissensbasierter Systeme, komfortable, leicht zu bedienende und möglichst graphische Werkzeuge zur Wissensakquisition zu entwikkeln, die es dem Experten ermöglichen, möglichst ohne Hinzuziehung eines Wissensingenieurs sein Wissen selbst zu strukturieren und in das wissensbasierte System einzugeben. Der Erfindung liegt die Aufgabe zugrunde, ein solches graphisches, allein durch den Experten, möglichst ohne Zuhilfenahme eines Wissensingenieurs zu bedienendes Werkzeug zur Wissensakquisition zu entwickeln, mit dessen Hilfe der Experte sein Wissen strukturieren, und einem wissensbasierten Diagnosesystem in einer solchen Weise eingeben kann, daß anschließend eine automatische Abarbeitung der so erstellten Wissensbasis durch die anderen Komponenten des wissensbasierten Diagnosesystems erfolgen kann. Diese Aufgabe wird durch ein wissensbasiertes Diagnosesystem mit graphischer Wissensakquisitionskomponente mit den Merkmalen nach Anspruch 1 gelöst.

Das erfindungsgemäße wissensbasierte Diagnosesystem besitzt eine graphische Wissensakquisitionskomponente, dem ein abstraktes Modell der defekten Maschine zugrundeliegt. Bei der erfindungsgemäßen Lösung werden die vom Experten eingegebenen Wissenstrukturen mit Hilfe graphischer Objekte repräsentiert und anschließend von dem wissensbasierten System abgearbeitet. Dabei ist jedes erlaubte graphische Objekt aus elementaren Objekten zusammengesetzt, welche Einheiten aus einer dem Diagnosesystem zugrundeliegenden Domäne ausdrücken. Jedes erlaubte graphische Objekt entspricht dabei einer syntaktisch korrekten Wissensstruktur dieser Domäne. Es kann aus mehrfach zu verwendenden Modulen aufgebaut sein und besitzt dadurch im allgemeinen eine graphartige hierarchische Struktur. Auf jeder hierarchischen Ebene, welche durch ein Modul dargestellt wird, hat jedes erlaubte graphische Objekt eine quasi baumförmige Struktur, welche eine Wurzel, Knoten, Kanten zwischen diesen Knoten sowie Blätter als elementare Objekte aufweist, wobei die Wurzel ein Ausgangsproblem, die Knoten Teilprobleme des Ausgangsproblems oder Teilprobleme von ihnen übergeordneten Teilproblemen, die Kanten Übergänge zwischen Teilproblemen und ihnen nachgeordneten Teilproblemen und die Blätter Diagnoseergebnisse, den Abbruch einer Diagnosesitzung oder einen Verweis auf komplexere Teilprobleme in Form von Modulen darstellen. Schließlich wird aus den graphischen Objekten dieser Art eine ablauffähige Wissensbasis erzeugt.

Ein wissensbasiertes Diagnosesystem mit graphischer Wissensakquisitionskomponente dieser Art hat den Vorteil, daß der Experte, welcher im allgemeinen kein Wissensingenieur ist, und daher keine Erfahrung bei der Erstellung von Wissensbasen besitzt, sein Wissen auf strukturierte Weise mit Hilfe einer graphischen Eingabesprache in Form einer graphischen Benutzeroberfläche des wissensbasierten Diagnosesystems diesem eingeben kann. Aufgrund der beschriebenen Merkmale des erfindungsgemäßen Systems kann der Experte bei der Eingabe der Wissensstrukturen keine Syntaxfehler machen, d.h. er kann lediglich erlaubte graphische Objekte erzeugen, welche per Konstruktion syntaktisch richtigen Wissensstrukturen entsprechen. Für die semantische Richtigkeit der vom Experten eingegebenen Wissensstrukturen trägt der Experte selbstverständlich allein die Verantwortung, da das wissensbasierte Diagnosesystem auf die Semantik der Domäne, d.h. auf die konkreten Inhalte des Anwendungswissens eines bestimmten Anwendungsgebietes, keinen Bezug nehmen kann. Durch die spezielle Eigenschaft des erfindungsgemäßen Systems, wonach zur Beschreibung der Wissensstrukturen mehrfach zu verwendende Module benutzt werden, besitzen die eingebbaren Wissensstrukturen bzw. die ihnen entsprechenden graphischen Objekte eine graphartige hierarchische Struktur. Dadurch bleiben die graphischen Objekte, welche vom Experten eingegeben werden, von vornherein übersichtlich und gut strukturiert.

Hierdurch wird die Möglichkeit fehlerhafter Eingaben bedeutend reduziert. Durch die spezielle baumartige Struktur der Module hat der Experte die Möglichkeit, ausgehend von einem globalem Problem der defekten Maschine allgemeinere Probleme in Teilprobleme bzw. ihnen nachgeordnete Teilprobleme zu zerlegen. Die Übergänge zwischen übergeordneten bzw. nachgeordneten Teilproblemen sind dabei durch das Vorliegen bestimmter Indizien beschrieben. Am unteren Ende der Hierarchie befinden sich an den Blättern der baumförmigen Struktur terminale Objekte, welche Diagnosergebnisse oder den Abbruch einer Diagnosesitzung oder einen Verweis auf komplexere Teilprobleme in Form anderer Module darstellen. Die spezielle Syntax dieser graphischen Sprache zur Beschreibung von Wissensstrukturen ermöglicht deshalb die Darstellung sehr allgemeiner Zusammenhänge auf nahezu beliebigen Domänen. Es ist ein besonderer Vorzug der erfindungsgemäßen Lösung, daß die derart graphisch repräsentierten Wissensstrukturen vom wissensbasierten System in automatischer Weise zu einer ablauffähigen Wissensbasis compiliert werden können. Hierdurch ist gewährleistet, daß schließlich nach erfolgter Eingabe der Wissensstrukturen durch den Experten ohne weitere Mitwirkung eines Wissensingenieurs eine ablauffähige Wissensbasis und damit ein anwendbares wissensbasiertes Wissenssystem erzeugt wird. Selbstverständlich kann das erfindungsgemäße Wissensakquisitionssystem auch zur Wartung einer bestehenden Wissensbasis verwendet werden.

Vorteilhafte Weiterbildungen der Erfindung ergeben sich aus den Unteransprüchen.

Tabellen 1a und 1b enthalten eine Beschreibung der kontextfreien Grammatik für Indizbedingungen.

Tabelle 2a und Tabelle 2b enthalten eine Gegenüberstellung elementarer graphischer Objekte und ihrer Domänenäquivalente zusammen mit ihrer graphischen Darstellung.

Tabellen 3a und 3b enthalten eine Übersicht über die graphischen Symbole einer Graphgrammatik für das Diagnosemodell der defekten Maschine.

Tabelle 4 zeigt anhand eines Beispiels den Aufbau eines Indizes aus Indizbedingungen.

Tabelle 5 gibt eine Übersicht über die Symbole, welche zur Modularisierung von Wissensbasen verwendet werden.

Tabelle 6a gibt eine Übersicht über die Pseudocode-Beschreibungen der G-Klassen zu den graphischen Objekten aus den Tabellen 2a und 2b (rechte Spalte).

Tabelle 6b gibt eine Übersicht über die Pseudocode-Beschreibungen der A-Klassen der Objekte in der linken Spalte der Tabellen 2a bzw. 2b.

Tabellen 7 und 8 enthalten eine überarbeitete kontextfreie Grammatik für die Indizbedingungen.

Tabelle 9a enthält eine Aufstellung der Nicht-Terminalen, für die eine Zusammenstellung im Strukturstack stattfinden kann.

Tabelle 9b: Zwischenergebnisse der lexikalischen und syntaktischen Analyse des Precompilers anhand eines Beispiels

Tabelle 9c: Ergebnis der Codengenerierung des Precompilers an hand eines Beispiels.

Tabelle 10 enthält eine Auflistung der Bausteintypen zur Wissensakquisition und der zugehörigen Modellbausteine.

Tabelle 11 enthält eine Auflistung von Umsetzbedingungen für die WA-Bausteine, für die es mehrere Modellbausteine gibt.

Tabelle 12 beschreibt ein Beispiel zur Umsetzung eines Wissensakquisitionsbausteins.
- Figur 1: zeigt ein Beispiel eines graphischen Objekts zur Beschreibung von Wissensstrukturen.
- Figur 2: zeigt eine Gegenüberstellung der verschiedenen Arten der Wissensrepräsentation bei konventionellen Programmen und wissensbasierten Systemen.
- Figur 3: zeigt ein Ablaufschema, wie es für die herkömmliche Erstellung wissensbasierter Systeme typisch ist.
- Figur 4: zeigt ein Ablaufschema bei der Wissensakquisition unter Verwendung eines graphischen Wissensakquisitionssystems.
- Figur 5: zeigt die Komponenten eines wissensbasierten Diagnosesystems mit graphischer Wissensakquisitionskomponente.
- Figur 6: zeigt eine graphische Darstellung der Modularisierung von Wissensbasen, wobei die Symbole aus Tabelle 5 verwendet worden sind.
- Figur 7: zeigt eine Skizze der graphischen Wissenakquisitionskomponente aus der Sicht des Benutzers.
- Figur 8: zeigt ein Ablaufdiagramm des Compilers zur Erzeugung einer Wissensbasis aus graphisch repräsentierten Wissensstrukturen.
- Figur 9: zeigt eine hierarchische Struktur von Dateisystemen zur Speicherung von Wissensstrukturen.
- Figur 10: zeigt ein Ablaufdiagramm eines Präcompilers für Indizien.
- Figur 11: zeigt ein Ablaufdiagramm zum Zusammenspiel von lexikalischer und syntaktischer Analyse.
- Figuren 12a, 12b und 12c: zeigen vereinfachte übergangsdiagramme für die überarbeitete kontextfreie Grammatik aus Tabelle 7.

Im folgenden wird die Erfindung anhand eines bevorzugten Ausführungsbeispiels und mit Hilfe der Figuren beschrieben.

Das wissensbasierte Diagnosesystem mit graphischer Wissensakquisitionskomponente besteht aus einem Entwicklungs- und einem Ablaufsystem. Das Entwicklungssystem, welches die Entwicklung der Wissensbasis unterstützt, besteht aus den folgenden Modulen:
- graphische Wissensakquisitionskomponente,
- intelligente Wissensbasisgenerierung,
- Testumgebung,
- Modellabarbeitung und
- dem Diagnosemodell der "defekten Maschine".

Das Ablaufsystem besteht aus den Modulen:
- Benutzeroberfläche des Ablaufsystems,
- Modellabarbeitung und
- Diagnosemodell der "defekten Maschine".

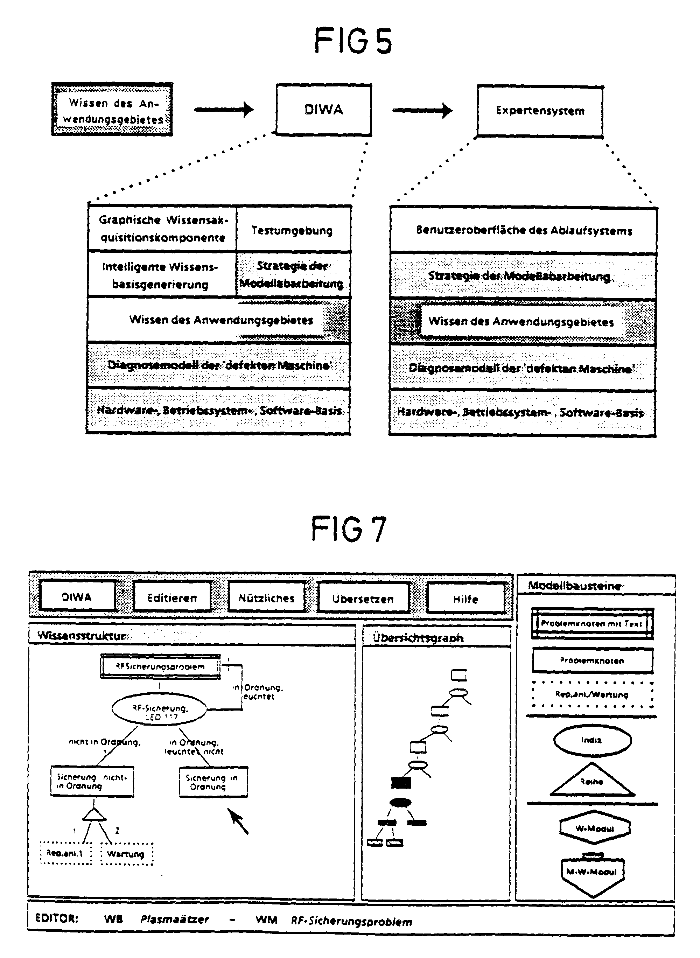

Alle Module sind nachfolgend der Übersicht halber kurz beschrieben und in Figur 5 ist der Informationsfluß zwischen diesen Modulen dargestellt.

### Diagnosemodell der "defekten Maschine".

Das Diagnosemodell der "defekten Maschine" stellt Basiseinheiten wie z.B. Problemknoten, Reparaturanleitung, Indiz, usw. und deren mögliche Verknüpfungen zur Realisierung einer statischen Wissensstruktur zur Verfügung. Dieses Diagnosemodell bildet die Syntax einer graphischen Sprache zur Beschreibung von Wissensstrukturen.

### Modellabarbeitung

Die Modellabarbeitung bildet den dynamischen Teil der Wissensstruktur (Problemursachensuche, Rücksprünge, usw.), also die Abarbeitung der statischen Wissensstrukturen, welche mit Hilfe des Modells der "defekten Maschine" beschrieben sind.

### Benutzeroberfläche des Ablaufsystems

Die Benutzeroberfläche des Ablaufsystems ermöglicht die Dialoge mit dem Benutzer während einer Diagnose-Sitzung. Es werden Parameterwerte erfragt sowie Erläuterungen und Reparaturanleitungen ausgegeben. Der Benutzer kann sich weitere Informationen über eine Sitzung anzeigen lassen.

### Intelligente Wissensbasisgenerierung

Erzeugt aus den vom Experten eingegebenen graphischen Wissensstrukturen die ablauffähige Wissensbasis. Dieser Modul stellt den Compiler zur automatischen Erzeugung einer ablauffähigen Wissensbasis aus der Menge der graphisch beschriebenen Wissensstrukturen dar. Hierbei werden gewisse Konsistenzüberprüfungen vorgenommen. Sind Fehler vorhanden, werden Meldungen in einem Übersetzungsprotokoll festgehalten.

### Graphische Wissensakquisitionskomponente

Die graphische Wissensakquisitionskomponente realisiert eine komfortable graphische Benutzeroberfläche für den Experten zum Erstellen der graphischen Wissensstrukturen. Hier werden einfache Überprüfungen vorgenommen (unerlaubte Verknüpfungen von Basissymbolen, usw.) und deren Verletzungen dem Benutzer sofort angezeigt.

### Testumgebung

Entspricht der Benutzeroberfläche des Ablaufsystems mit zusätzlicher Trace-Funktionalität und einem Übersichtsgraphen zum einfachen Testen von erzeugten Wissensbasen.

Wie in Figur 5 dargestellt, bildet das Wissen auf einem bestimmten Anwendungsgebiet, über welches ein Experte verfügt, den Ausgangspunkt der Erzeugung einer Wissensbasis. Dieses dem Experten zur Verfügung stehende Wissen wird mit Hilfe der graphischen Wissensakquisitionskomponente dem Entwicklungssystem des wissensbasierten Diagnosesystems eingegeben. Nach Ablauf der intelligenten Wissensbasisgenerierung steht das Wissen des Anwendungsgebietes dem wissensbasierten Diagnosesystem für den Ablaufmodus zur Verfügung. Das fertige Expertensystem liegt nun vor

### Diagnosemodell der "defekten Maschine"

Das Diagnosemodell der "defekten Maschine" beschreibt die Zerlegung des globalen Problems "defekte Maschine" in Teilprobleme. Diese Zerlegung ist hierarchisch und endet bei den Fehlerursachen oder den sog. Wartungsausgängen. Die Fehlerursachen werden durch die zugehörigen Reparaturanleitungen repräsentiert. Mit Wartungsausgang wird eine Situation bezeichnet, in der die Rufbereitschaft oder der Experte zu Rate gezogen wird, weil das Expertensystem-Wissen nicht mehr ausreicht.

Graphisch läßt sich dieses Modell als Baum darstellen. Das globale Problem "defekte Maschine" ist die Wurzel, die Teilprobleme sind die Knoten und die Reparaturanleitungen bzw. die Wartungsausgänge die Blätter des Baumes. Die Übergänge von einem Teilproblem zum anderen werden als Kanten bezeichnet. Diese sind beschriftet, um die Fehlerlokalisierung durch möglichst frühzeitige Einschränkung der Suche im Baum auf einen Teilbaum zu beschleunigen. Es gibt zwei Typen von Beschriftungen, sog. Indizien und Reihenfolgen. Die folgenden Ausführungen werden mit Hilfe der Figur 1 verdeutlicht.

Ein Indiz besteht aus einer Menge von Konstanten und Parametern und aus mehreren Indizbedingungen, die jeweils einem Nachfolger zugeordnet sind. Es dürfen in den Indizbedingungen eines Indizes nur Parameter und Konstanten verwendet werden, die im Indiz angegeben sind. Für die Indizbedingungen gibt es eine Sprache, die die Verknüpfungsmöglichkeiten von Parametern und Konstanten zu einer Indizbedingung beschreibt. Eine Indizbedingung kann aus komplexen durch **und ("&")** und **oder ("V")** verbundenen Klauseln bestehen. Die zu einem Indiz gehörigen Indizbedingungen müssen nicht disjunkt sein.

Eine besondere Indizbedingung ist **SONST**. Damit wird das Komplement aller zu einem Indiz gehörigen Indizbedingungen bezeichnet (ein Indiz, seine Parameter und Konstanten sind in Figur 1 in ovalen und die zugehörigen Indizbedingungen in den nachfolgenden dünn umrandeten Kästchen dargestellt). Die Syntax eines Indizes ist aus Tabelle 4 zu entnehmen.

Eine Reihenfolge gibt für die Teilprobleme eines Teilproblems eine Abarbeitungsreihenfolge an. Reihenfolgen sind als ganze Zahlen an den Kanten (Figur 1) dargestellt. Eine Reihenfolge wird vom Experten zur Entwicklungszeit aufgrund seiner Erfahrung (z.B. Reparaturkosten, Auftrittshäufigkeit, Überprüfungsaufwand) festgelegt, wenn es kein geeignetes Indiz gibt.

Es ist möglich, einem Problemknoten eine oder mehrere Dateien zuzuordnen, die bei Betrachtung desselben in der Ablaufumgebung ausgegeben werden. Diese sog. Erläuterungen können z.B. eine Anleitung zum Aufbau bestimmter Teile enthalten. Jeder Problemknoten kann eine Erläuterung haben (in Figur 1 mit doppeltem Rand dargestellt).

Des weiteren gibt es einen besonderen Knoten, den sog. Rücksprungknoten. Dieser ist dadurch gekennzeichnet, daß er an der nachfolgenden Kante eine Indizbeschriftung hat und es eine Indizbedingung zu diesem Indiz gibt, die das Nichtvorhandensein des zum Rücksprungknoten gehörenden Problems charakterisiert (durchgestrichene Verbindung in Figur 1 vom Oval zum Knoten).

Um mit dem oben beschriebenen Modell Strukturen zu erhalten, die von der Größe her handhabbar sind, ist eine Modularisierung von Wissensbasen nötig. Eine solche Modularisierung wird in dem wissensbasierten Diagnosesystem angeboten bzw. automatisch vorgenommen.

Eine Wissensbasis ist eine abgeschlossene Wissensstruktur, die z.B. für die Diagnose einer Maschine notwendig ist. Eine Wissensbasis ist eine besondere Form eines Wissensmoduls. Wissensmodule und M-Wissensmodule dienen der hierarchischen Modularisierung von großen Wissensstrukturen. Sie können selbst wiederum Wissensmodule und M-Wissensmodule enthalten. Die M-Wissensmodule sind im Gegensatz zu den Wissensmodulen mehrfach einzusetzen, d.h. es kann von verschiedenen Stellen in der Wissensstruktur oder auch aus verschiedenen Wissensbasen auf ein und denselben M-Wissensmodul verwiesen werden. Sowohl Wissensmodule als auch M-Wissensmodule können nur als Blatt einer Wissensstruktur eingehängt werden.

Von dem wissensbasierten Diagnosesystem bzw. von dessen Entwicklungssystem wird eine automatische Wissensmodulgenerierung bei der Wissensbasiserstellung nach folgendem Prinzip vorgenommen:
Jeder Rücksprungknoten erzeugt einen neuen Wissensmodul und ist selber oberster Knoten (Startknoten) im erzeugten Wissensmodul. Anstatt des Rücksprungsknotens wird im darüber liegenden Wissensmodul ein Stellvertreter eingehängt, der Verwaltungsinformation und Verweise auf den durch ihn repräsentierten Wissensmodul und den Startknoten im erzeugten Wissensmodul (Rücksprungknoten) enthält. Zusätzlich können vom Benutzer weitere Wissensmodule definiert werden, die einen beliebigen Problemknoten als Startknoten besitzen.

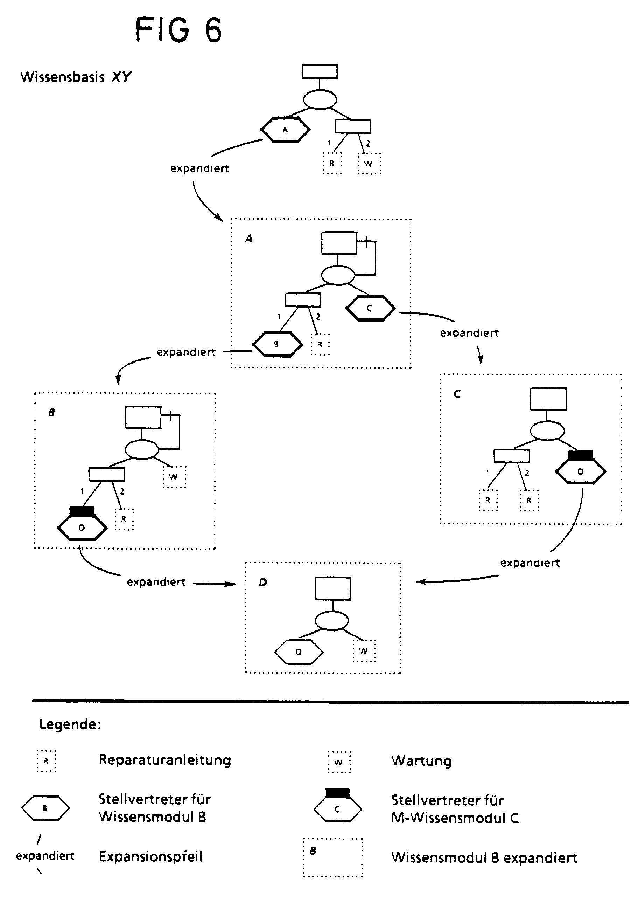

Für den Wissensmodulstellvertreter wird in der graphischen Wissensakquisitionskomponente ein eigenes Symbol verwendet, das den Namen des Wissensmoduls enthält. In Figur 6 ist ein Beispiel für eine Wissensbasis in abstrahierter Form enthalten. Die Legende zu Figur 6 befindet sich in Tabelle 5. Dort sind einige Stellvertretersymbole (unregelmäßige Sechsecke) fett umrandet S und auf die durch sie repräsentierte Struktur wird mit Hilfe des Expansionspfeiles verwiesen. Der expandierte Wissensmodul ist von einem gepunkteten Kasten K umgeben, der oben links den zugehörigen Wissensmodul Namen enthält. Eine Wissensbasis wird modulweise gespeichert.

Dieses Diagnosemodell ist wie der Name schon sagt ein Modell zur heuristischen Diagnose von komplexen Maschinen. Betrachtet man die Diagnose einer defekten Maschine als das Suchen einer Fehlerursache aus der Menge aller möglichen Fehlerursachen, so kann das wissensbasierte Diagnosesystem auch für analoge Probleme, wie Auswahlprobleme (ein/wenige Element/e) aus einer Menge verwendet werden.

### Graphische Wissensakquisitionskomponente

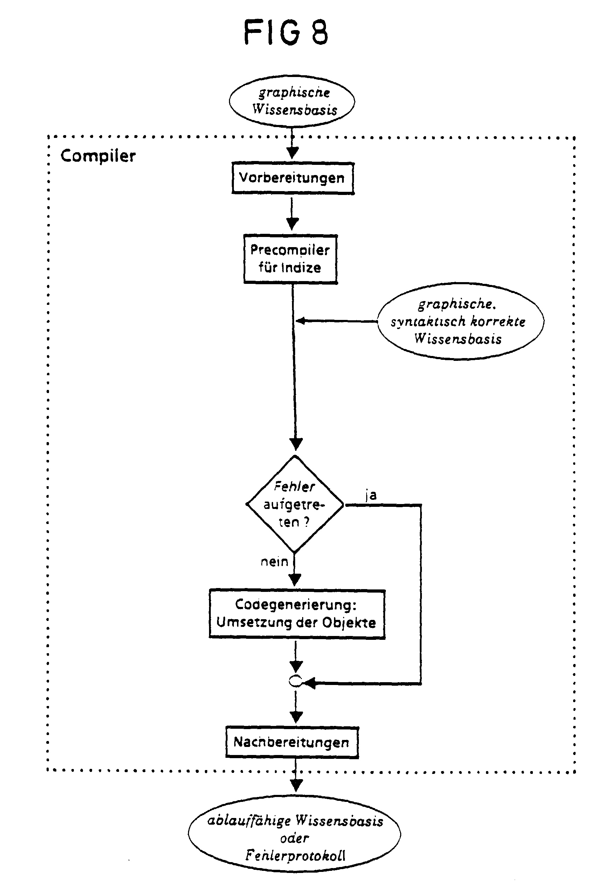

Das mit dem Modell der defekten Maschine strukturierte Expertenwissen kann in der graphischen Wissensakquisitionskomponente des Entwicklungssystems des wissensbasierten Diagnosesystems komfortabel eingegeben werden. Komfortabel heißt in diesem Zusammenhang, daß Einzelelemente oder Teilbäume verschoben werden können und daß bei dem Verschieben die Verbindungen automatisch mitgezogen werden. In Figur 7 ist eine Skizze der graphischen Wissensakquisitionskomponente dargestellt.

Mit der graphischen Wissensakquisitionskomponente sind prinzipiell nur Wissensstrukturen erstellbar, die entsprechend dem Modell der defekten Maschine syntaktisch korrekt sind. Der Aufbau einer Wissensstruktur erfolgt durch das
- Kopieren von Basiselementen des Diagnosemodells der defekten Maschine,
- Individualisieren derselben in einer Schablone,
- Plazieren des entstandenen individuellen Elements und
- Verbinden der entstandenen individuellen Elemente.

Der Benutzer muß hierzu von Basiselementen des Modells, die im Modellbausteinemenü angeboten werden, eine Kopie machen. Das kopierte Basiselement wird zuerst in einer Schablone zu einem individuellen Element gemacht, indem die aufgeblendete Schablone ausgefüllt wird. Hierin sind die unbedingt auszufüllenden Felder, z.B. der Name, gekennzeichnet. Anschließend kann das Element in die Wissensstruktur plaziert werden.

Möchte der Benutzer zwei individuelle Modellelemente verbinden, überprüft die graphische Wissensakquisitionskomponente zuerst, ob diese Verbindung zulässig ist. Ist sie zulässig, wird in den beteiligten individuellen Elementen die Verbindung eingetragen und in der Wissensstruktur sichtbar. Ansonsten wird der Benutzer über die Unzulässigkeit der Verbindung informiert. Die Plazierung der Elemente wird nicht automatisch vom Entwicklungssystem vorgenommen, sondern der Benutzer ist für das Layout der Wissensstruktur selbst zuständig. Will er ein weiteres Teilproblem oder ein übergeordnetes Problem einhängen, muß er selbst den benötigten Platz schaffen, indem er z.B. Teilstrukturen verschiebt.

Für das Abspeichern von Wissensstrukturen gibt es zwei verschiedene Modi. Beim ersten wird die Wissensbasis bzw. der M-Wissensmodul nur abgespeichert und wird dadurch als nicht übersetzbar gekennzeichnet. Dieser Modus ist geeignet, wenn der Benutzer die Editierung unterbrechen möchte, aber die bis dahin erstellten Strukturen sichern möchte. Beim zweiten werden vor der tatsächlichen Speicherung Überprüfungen ausgeführt. Eine Wissensbasis bzw. ein M-Wissensmodul wird als übersetzbar gekennzeichnet, wenn die Überprüfungen erfolgreich ausgeführt wurden. Ansonsten werden sie als nicht übersetzt gekennzeichnet.

Um bereits erstellte Wissensstrukturen zu modifizieren, gibt es drei unterschiedliche Funktionsbereiche:
- Verschieben von Einzelelementen und Teilstrukturen,
- Modifizieren und
- Löschen von Einzelelemten und Teilstrukturen.

Im Editor des Entwicklungssystems gibt es einen Übersichtsgraphen, der die gesamte Wissensbasis bzw. den gesamten M-Wissensmodul darstellt. In Figur 6 ist er für eine Beispielstruktur enthalten. Der Übersichtsgraph wird während der Benutzer Wissensstruktur editiert vom Entwicklungssystem automatisch aufgebaut. Dieser enthält nur stilisierte Knoten und Kanten ohne Knoteninhalte und Kantenbeschriftungen. Für jedes in der Wissensstruktur hinzugefügte individuelle Element wird ein Äquivalent im Übersichtsgraphen eingetragen.

Ist eine Wissensstruktur als übersetzbar gekennzeichnet, kann der Benutzer die Funktion Übersetzen auswählen, um aus der Wissensstruktur automatisch eine ablauffähige Wissenbasis zu erzeugen.

### Intelligente Wissensbasisgenerierung (Compiler)

Wird in der graphischen Akquisitionskomponente die Funktion **Übersetzen** einer Wissensbasis oder eines M-Wissensmoduls gewählt, wird die dort erstellte und zuvor abgespeicherte übersetzbare Wissensstruktur an das Modul **intelligente Wissensbasisgenerierung**, nachfolgend Compiler genannt, in Form einer Kopie übergeben. Dies geschieht in Form einer bzw. mehrerer Dateien. Daneben werden verschiedene Verwaltungsinformationen, die später für die Abarbeitung der ablauffähigen Wissensbasis bzw. M-Wissensmodule benötigt werden, erzeugt.

Die syntaktische Korrektheit der graphischen Wissensstrukturen wird bis auf die Indizbedingungen der Indizien vom Editor der graphischen Wissensakquisitionskomponente gewährleistet. Für die Indizbedingungen gibt es einen Präcompiler, der jeweils die Indizbedingungen des Indizes auf die syntaktische Korrektheit überprüft und einige symantische Überprüfungen vornimmt, bevor die Indizbedingungen in eine durch den Rechner verarbeitbare Form (z.B. in Common Lisp Code) umgesetzt werden. Die hier verwendeten Begriffe aus dem Bereich des Compilerbaus können der Standardliteratur Alfred V.Aho, Ravi Sethi, Jeffrey D. Ullmann: Compilers Principles, Techniques and Tools 1986, Bell Telephone Laboratories, Inc., Dt.Übersetzung von Prof.Dr.Gerhard Barth u. Mitarbeiter, Uni Stuttgart, Alfred V.Aho, Ravi Sethi, Jeffrey D.Ullman: Compilerbau, Band 1 und 2, 1988 Addison-Wesley (Deutschland) GmbH auf diesem Gebiet entnommen werden. Nachfolgend werden die verschiedenen Compilerphasen und ihr Zusammenspiel beschrieben.

### Architektur des Compilers

Der Compiler ist in die nachfolgend aufgeführten fünf Phasen aufgeteilt:
- Vorbereitungen
- Präcompiler für Indize
- Semantik auf der Objektebene
- Umsetzung der Objekte
- Nachbereitungen.

In Figur 8 ist die Anordnung der Phasen und der Ablauf einer Übersetzung dargestellt.

### Compilerphasen

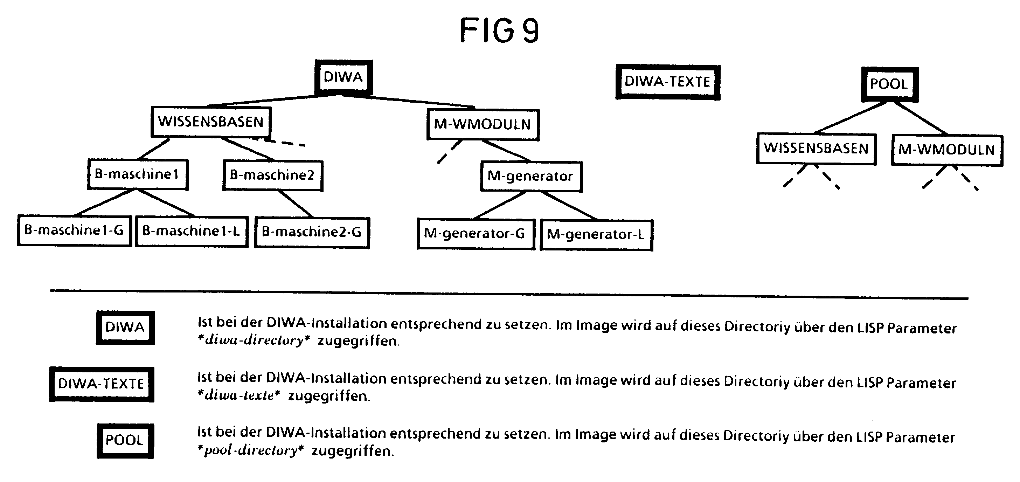

Die Hierarchie der Dateien im wissensbasierten Diagnosesystem wird hier kurz beschrieben und ist in der Figur 9 dargestellt. Eine Wissensbasis bzw. ein M-Wissensmodul wird in dem wissensbasierten Diagnosesystem in einem eigenen Unterverzeichnis (subdirectory) abgespeichert; Wissensbasen im Verzeichnis Wissensbasen und M-Wissensmodulen im Verzeichnis MW-Modulen. Die eigentlichen Namen für die Verzeichnisse unterscheiden sich jeweils im Präfix. Für die Wissensbasen wird der Präfix "B" und für die M-Wissensmodule der Präfix "M" verwendet.

Im Unterverzeichnis für die Wissensbasen bzw. M-Wissensmodulen gibt es jeweils ein Unterverzeichnis für die graphische Wissensbasis bzw. den graphischen M-Wissensmodul und eines für die zugehörige ablauffähige Wissensbasis bzw. den ablauffähigen M-Wissenmodul. Diese beiden Unterverzeichnisse und die zugehörigen Dateien unterscheiden sich im Postfix voneinander. Für die graphischen Strukturen wird der Postfix "G" und für die ablaufähigen Strukturen der Postfix "L" verwendet.

Der Compiler übersetzt die graphische Wissensstruktur in die zugehörige ablauffähige Wissensbasis bzw. den ablauffähigen M-Wissensmodul. Die zu einer ablauffähigen Wissensbasis bzw. einem ablauffähigen Wissensmodul gehörigen Dateien erhalten denselben Dateinamen bis auf den Postfix "G". Hierfür wird das Postfix "L" eingesetzt und kennzeichnet die ablauffähigen Wissensstrukturen. Die generierten Dateien werden im Unterverzeichnis für die ablauffähige Wissensbasis bzw. den ablauffähigen M-Wissensmodul abgespeichert.

### Gemeinsamenkeiten aller Phasen

Alle vier Phasen des Compilers haben folgende Gemeinsamkeiten:
- während aller Compilerphasen wird ein Übersetzungsprotokoll mitgeführt, in welches sowohl Meldungen über fehlerhaft als auch über erfolgreich abgeschlossene Phasen geschrieben werden. Dieses Protokoll wird in die Datei C-Protokoll.TXT im Verzeichnis für die zu generierende ablauffähige Wissensbasis bzw. M-Wissensmodul gespeichert. Diese Informationen werden teilweise auch an die Wissensakquisitionskomponente übergeben, die diese in einem entsprechenden Meldungsfenster an den Benutzer ausgibt. Für den jeweils ersten auftretenden Fehler innerhalb einer Compilerphase wird eine allgemeine Meldung, daß ein Fehler aufgetreten ist, auch an die Wissenakquisitionskomponente zur Ausgabe im Meldungsfenster übergeben.
- die vom Benutzer während der Wissensakquisition eingegebenen Namen für die einzelnen Elemente der Wissensstruktur (Instanzen) sind sozusagen externe Namen und werden im Eintrag (Slot) "Text" der jeweiligen Instanz gespeichert. Diese Instanzen selbst haben vom System generierte eindeutige Namen erhalten. Über diese Namen kann man auf die Instanzen zugreifen. Alle Meldungen sowohl ins Übersetzungsprotokoll als auch an die graphischen Wissensakquisitionskomponente werden mit dem externen Namen versehen. Der Compiler arbeitet dagegen intern mit dem eindeutigen internen Namen.
- die Generierung des Codes, d.h. die Umsetzung der Instanzen der graphischen Akquisitionskomponente in Instanzen der Wissensakquisitionskomponente werden mit dem externen Namen versehen. Der Compiler arbeitet dagegen intern mit dem eindeutigen internen Namen.
- die Generierung des Codes, d.h. die Umsetzung der Instanzen der graphischen Akquisitionskomponente in Instanzen der zugrundeliegenden Modells und die Umsetzung der Indizbedingungen in LISP Formeln erfolgt nur, wenn alle Überprüfungen erfolgreich abgeschlossen sind. Damit soll eine unnötige Generierung von Code vermieden werden.
- die in den verschiedenen Compilerphasen auftretenden Fehler werden im Übersetzungsprotokoll in Bezug auf Art und Ort so präzise dokumentiert, wie dies mit vertretbarem Aufwand möglich ist. Im Übersetzungsprotokoll steht daher nicht lediglich eine Meldung, daß ein Fehler vorliegt, sondern z.B. für die Syntaxanalyse der Indizbedingungen ist auch angegeben, an welcher Stelle in der Indizbedingung der Fehler auftritt.

### Präcompiler für Indize

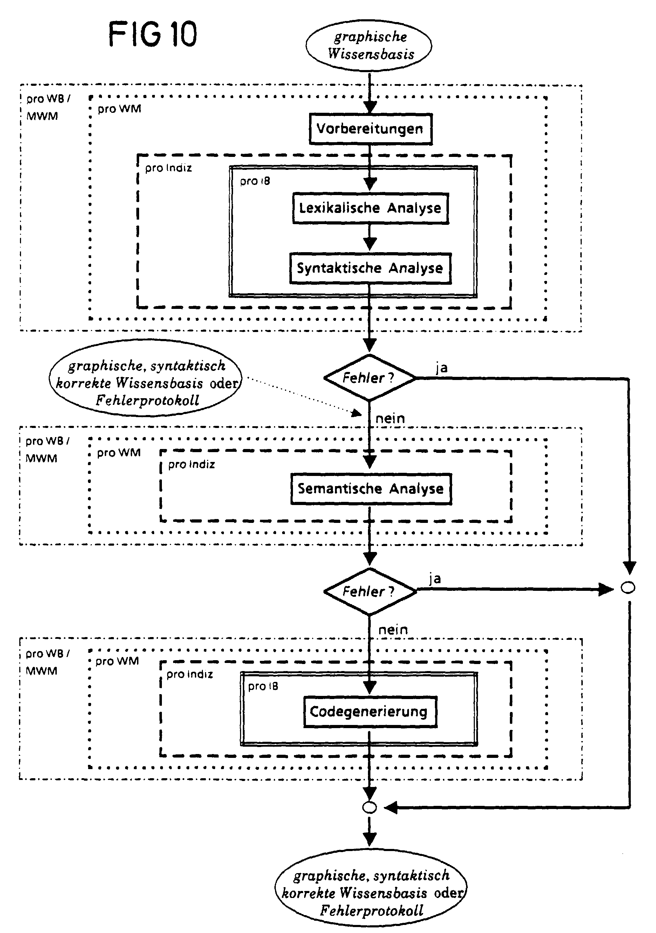

Der Präcompiler für Indize untersucht Indize und die zugehörigen Indizbedingungen, Parameter und Konstanten auf syntaktische Korrektheit und übernimmt diverse semantische Überprüfungen. Der Ablauf des Präcompilers ist in Figur 10 dargestellt. Der Präcompiler erhält als Eingabe die zu übersetzende Wissensstruktur. Er besteht vom Aufbau her aus drei Blöcken. Im ersten Block werden die zu untersuchenden Indize mit den zugehörigen Indizbedingungen, Parametern und Konstanten jeweils für ein Wissensmodul der Wissensbasis bzw. des M-Wissensmoduls gesammelt. Anschließend wird für jede Indizbedingung eines Indizes im Wissensmodul sowohl die lexikalische als auch die syntaktische Analyse vorgenommen.

Sind dabei Fehler aufgetreten, ist der Präcompiler fertig. Sind keine Fehler aufgetreten, wird der zweite Block bearbeitet. Dort wird modulweise für jedes Indiz als auch in der gesamten Wissensbasis bzw. im gesamten M-Wissensmodul die semantische Analyse durchgeführt. Sind während des zweiten Blockes Fehler aufgetreten, ist der Präcompiler fertig. Sind keine Fehler aufgetreten, wird modulweise für jede Indizbedingung eines Indizes im Wissensmodul eine TRUE oder FALSE liefernde LISP-Bedingung generiert (Codegenerierung). Diese wird dann anstelle der alten Indizbedingung eingetragen.

Im Übersetzungsprotokoll wird festgehalten, daß der Präcompiler für Indize momentan arbeitet. Eine entsprechende Meldung wird auch an die Wissensakquisitionskomponente zur Ausgabe im Meldungsfenster übergeben. Die Namen der für die nachfolgenden Untersuchungen benötigten Indize werden aus der zu übersetzenden Wissensbasis bzw. aus dem zu übersetzenden M-Wissensmodul für jeden Modul herausgesucht und für spätere Präcompilerphasen z.B. in einer lokalen Hashtabelle, abgespeichert. Es werden die zur Wissensbasis gehörigen Wissensmodule und M-Wissensmodule sequentiell, top-down, depth-first jeweils für sich untersucht. Die anzulegende Symboltabelle wird für die gesamte zu übersetzende Wissensbasis bzw. den zu übersetzenden M-Wissensmodul angelegt.

### Lexikalische Analyse der Indizbedingungen

Die Aufgabe der lexikalischen Analyse besteht darin, die Eingabe (Indizbedingung) einzulesen und diese entsprechend für die nachfolgende Syntaxanalyse vorzubereiten. Dabei werden Leerzeichen, Zeilenschaltungen usw. beseitigt und alle Bezeichner, Strings und Zahlen auf ihre syntaktische Korrektheit überprüft und entsprechend übersetzt. Für jedes eingelesene Element wird ein Eintrag in der Symboltsbelle vorgenommen, wenn das Element nicht bereits enthalten ist.

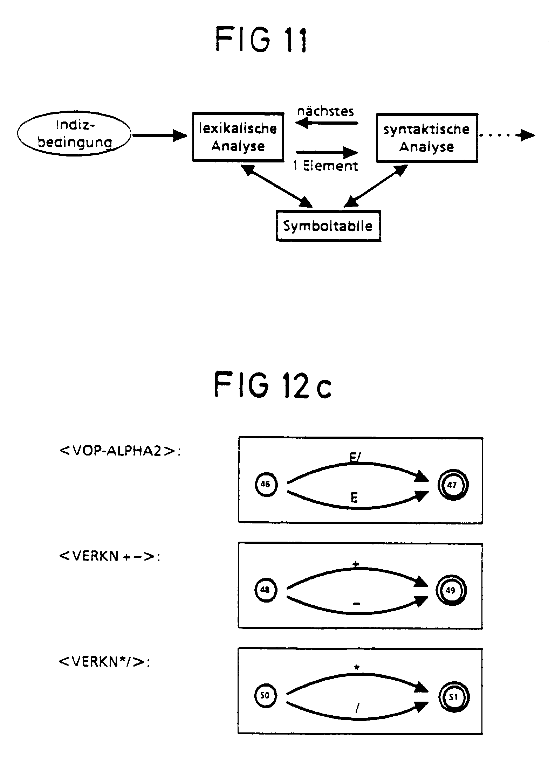

Die lexikalische Analyse wird von der syntaktischen Analyse aufgerufen, wenn diese ein weiteres Element der Eingabe zur syntaktischen Überprüfung benötigt. Figur 11 zeigt das Zusammenspiel von lexikalischer und syntaktischer Analyse. Die Trennung zwischen lexikalischer und syntaktischer Analyse wird vorgenommen, weil
- die Portierung des Präcompilers auf andere Rechner, die einen anderen Zeichensatz verwenden, vereinfacht wird, und
- die syntaktische Analyse dadurch ebenfalls vereinfacht wird.

Beim Einlesen einer Indizbedingung in der Wissensakquisitionskomponente wurden die LISP-Einlesefunktionen verwendet, die Parameter, Sonderzeichen, Zahlen und Strings bereits entsprechend einlesen. Dagegen werden geklammerte Ausdrücke entsprechend LISP als ein Listenelement eingelesen. Die Indizbedingungen eines Indizes sind zusammen mit ihren zugehörigen Nachfolgern im Slot "Nachklauseln" des Indizes abgelegt. Eine Indizbedingung liegt als Liste vor, die wiederum geschachtelte Listen von LISP Symbolen, Zahlen und Operationszeichen enthalten kann. Die folgenden Schritte werden jeweils für die Indizbedingungen eines Indizes ausgeführt:
a) die syntaktische Überprüfung und Umsetzung von Bezeichnern, Strings und Zahlen in die terminalen Grammatiksymbole "Num-Bezeichner", "Alpha-Bezeichner", "String", "Zahl". Treten hierbei Fehler auf, so wird eine entsprechende Fehlermeldung ins Übersetzungsprotokoll geschrieben und ggf. auch an die Wissensakquisitionskomponente weitergegeben. Die Bezeichner basieren dabei auf dem Standard-Character-Set von Common Lisp, ohne die für die Indizbedingungen in der Grammatik definierten vorbelegten Namen, wie z.B.
   BETRAG, %, &, V, v, E, e, = , ...
   Der angegebene Name muß einem korrekten Bezeichner für ein LISP-Symbol entsprechen (s. auch Guy L. Steele, Common Lisp: The Language, Digital Press 1984, Kap. 23, Seite 23ff). Als Zahlen sind Integer- und Floating-Point-Zahlen erlaubt, wie sie in Lisp zulässig sind (s. auch Guy L. Steele, Common Lisp: The Language, Digital Press 1984, Kap. 2.1, S. 13ff).
   Ob ein Bezeichner für einen numerischen oder alphanumerischen Parameter oder eine Konstante steht, kann aufgrund der Wertebereichsdefinition entschieden werden. Ist dort eine Aufzählung von Zahlen enthalten oder eine bzw. mehrere Bereichsangaben, so handelt es sich um einen numerischen Parameter. Ist dort eine Aufzählung von Strings enthalten, so handelt es sich um einen numerischen Parameter. Konstanten haben jeweils nur einen Wert.
b) Aufbrechen der von Lisp als ein Element eingelesenen Listen, so daß die Syntaxanalyse jeweils das nächste Element der zu prüfenden Indizbedingungen enthält.
c) Um das Ende einer Indizbedingung zu kennzeichnen, wird ein Sondersymbol $ an die Syntaxanalyse zurückgegeben.
d) Anlegen der Symboltsbelle.
e) Prüfen, ob die in der Indizbedingung angegebenen Bezeichner, Konstanten und Parameter, mit denen die im zugehörigen Indiz angegeben sind, übereinstimmen. Wenn nicht, erfolgt eine Fehlermeldung ins Übersetzungsprotokoll, welche ggf. auch an die Wissensakquisitionskomponente weitergegeben wird.

- Beispiel:: Indizbedingung:
BETRAG (Solleistung-Vorwärtsleistung) < = 10% (Solleistung)
nach der lexikalischen Analyse:
BETRAG (num-Bezeichner - num-Bezeichner) < = Zahl % (num-bezeichner)

### Syntaktische Analyse der Indizbedingungen

Die Syntaxanalyse analysiert den Eingabestring (Indizbedingung) auf seine syntaktische Korrektheit. Die zulässige Syntax für die Indizbedingungen wird durch die in Tabelle 7 zusammengefaßten Definitionen für eine kontextfreie Grammatik charakterisiert. Die syntaktische Analyse der Indizbedingungen wird mit Hilfe der prädiktive Syntaxanalyse vorgenommen. Diese ist eine spezielle Form der top down Analyse, bei der für einen Eingabestring eine Linksherleitung gesucht wird. Um die prädiktive Syntaxanalyse auf eine kontextfreie Grammatik anzuwenden, darf die kontextfreie Grammatik keine Linksrekursion enthalten. Da ein prädiktiver Parser ohne Rücksetzen arbeitet, muß außerdem für jedes Nichtterminale eindeutig bestimmt sein, welche Ersetzungsregel während einer Herleitung anzuwenden ist.

Um dies zu erreichen, wird in der kontextfreien Grammatik zuerst die Linksrekursion beseitigt und anschließend wird sie linksfaktorisiert. Die entstehende Grammatik unterscheidet sich von der vorherigen durch mehr Nichtterminale. Diese entstehende Grammatik wird zusammen mit den zugehörigen Regeln sowie den veränderten Regeln in Tabelle 8 formal dargestellt.

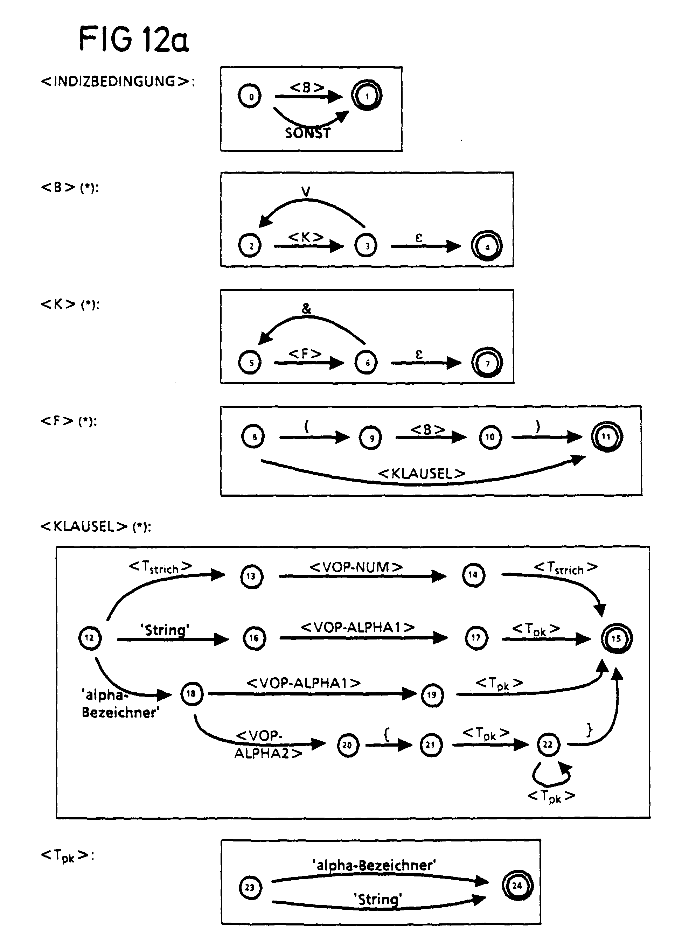

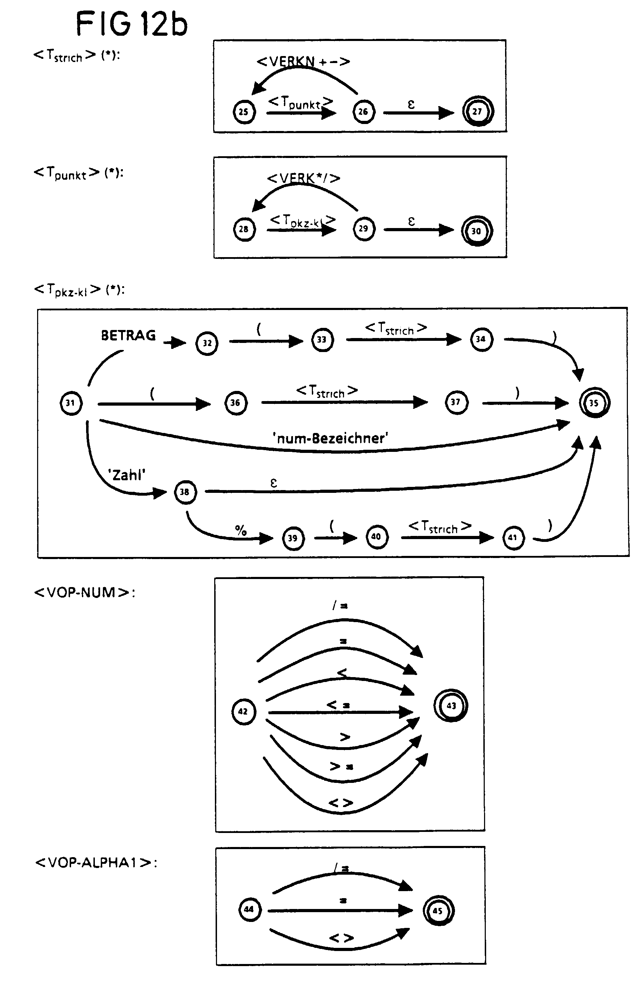

Aus der überarbeiteten kontextfreien Grammatik lassen sich Übergangsdiagramme gewinnen, die anschließend vereinfacht werden. Die doppelt umrandeten Zustände sind Endzustände für das jeweilige Übergangsdiagramm. Diese vereinfachten übergangsdiagramme sind in den Figuren 12a, 12b und 12c dargestellt. Mit Hilfe dieser Übergangsdiagramme und dem noch zu beschreibenden Abarbeitungsalgorithmus für diese Übergangsdiagramme läßt sich ein prädiktiver Parser erstellen. Zur weiteren Beschreibung werden einige Vorbemerkungen und Definitionen zusammengestellt:
Unter Verarbeitung des aktuellen Zeichens der Eingabe wird im folgenden verstanden, daß ein Zeichen im sowohl noch zu beschreibenden Strukturstack als auch in einer Liste der jeweils erkannten Symbole, die am Ende die erkannte Indizbedingung enthält, eingefügt wird. Die Mengen First (NT) und Follow (NT) sind für jedes Nichtterminale NT wie in dem Buch von Alfred V.Aho, Ravi Sethi, Jeffrey D.Ullman: Compilers Principles, Techniques and Tools 1986, Bell Telephone Laboratories, Inc., Deutsche Übersetzung von Prof.Dr. Gerhard Barth u. Mitarbeiter, Uni Stuttgart,Alfred V.Aho, Ravi Sethi, Jeffrey D.Ullman:Compilerbau, Band 1 und 2 1988, Addison-Wesley (Dt.) GmbH beschrieben zu berechnen. Im Diagrammaufruf-Stack werden im noch zu beschreibenden Algorithmus die Übergangsdiagramme zwischengespeichert, während ein hierarchisch tiefer hängendes Übergangsdiagramm bearbeitet wird.
Die während der Syntaxanalyse gewonnene Struktur der untersuchten Indizbedingung ist eine wichtige Information sowohl für die Codegenerierung als auch für die semantische Analyse. Dafür wird in einen Stack, der im folgenden als Struktur-Stack bezeichnet wird, jedes erkannte terminale Zeichen der Eingabe gespeichert. Es wird hier der externe Name des Elements (slot TEXT) gespeichert und nicht das terminale Grammatiksymbol. Des weiteren wird am Ende der Bearbeitung von bestimmten Nichtterminalen aus Teilen der bekannten Zeichen die sich im Strukturstack befinden, eine zusammengehörige Gruppe generiert und anstelle der einzelnen Zeichen im Struktur-Stack gespeichert.

Tabelle 9a zeigt eine Übersicht über diese besonderen Nichtterminalen.

Dabei unterscheiden sich die Zusammenfassungen in der Anzahl der beteiligten Elemente und darin, ob überhaupt zusammengefaßt wird. Um diese Aufgabe einheitlich zu lösen, wird in den mit einem (*) gekennzeichneten Übergangsdiagrammen in den Figuren 12a, 12b und 12c während deren Abarbeitung eine für dieses Diagramm lokale Variable var bei jedem Zustandsübergang ungleich einer E-Kante, an der kein Element verarbeitet wird um 1 erhöht. Die Zusammenfassung in Gruppen findet im Endzustand des jeweiligen Diagramms statt. Dabei gilt:
- var = 1 →: keine Zusammenfassung
- var = n; n 1 →: Zusammenfassung der n obersten Struktur-Stackelemente in umgekehrter Reihenfolge und Eintrag des Ergebnisses im Struktur-Stack.

Tabelle 9b zeigt ein Beispiel für diese Zusammenfassung.

### Abarbeitungsalgorithmus

Das aktuelle Zeichen der Eingabe wird von der lexikalischen Analyse auf Anforderung an den Parser geliefert. Der prädiktive Parser beginnt im Startzustand des Übergangsdiagramms für das Startsymbol der Grammatik, <INDIZBEDINGUNG>. Angenommen er ist nach einer gewissen Zeit im Übergangsdiagramm Üₖ im Zustand i (kein Endzustand) angekommen und von diesem geht zum Zustand j eine Kante:
- ist diese Kante mit einem Terminal beschriftet und das aktuelle Zeichen der Eingabe entspricht diesem Terminal, so wird das aktuelle Zeichen der Eingabe verarbeitet, der Zähler für das Zusammenfassen varₖ inkrementiert und vom Zustand i in den Zustand j übergegangen.
- ist diese Kante mit einem Nichtterminal NTₘ beschriftet, so wird überprüft, ob das aktuelle Zeichen der Eingabe in First (NTₘ) enthalten ist. Ist dies der Fall, so wird das zum aktuell bearbeiteten Übergangsdiagramm Üₖ gehörende nichtterminale NTₖ mit samt dem aktuellen Zustand i auf den Diagrammaufruf-Stack gelegt und der Parser wechselt in den Startzustand des Übergangsdiagramms Üₘ von NTₘ. Dabei wird kein Zeichen der Eingabe verarbeitet.

Ist der Endzustand im Übergangsdiagramm von NTₘ erreicht, wird ggf. (varₘ < 1) die Zusammenfassung von Elementen im Struktur-Stack vorgenommen. Anschließend wird das oberste Element des Diagrammaufrufstacks, NTₖ geholt, der Zähler fürs Zusammenfassen varₖ inkrementiert und im zugehörigen Übergangsdiagramm Üₖ zum Zustand j übergegangen.
- Ist diese Kante mit einem Elementsymbol beschriftet und sämtliche anderen Kanten zwischen dem Zustand i und j sind nicht möglich, so wird diese Kante mit dem Elementsymbol überschritten. Dabei wird kein Zeichen der Eingabe verarbeitet.
- Ist keine Kante vom Zustand i zum Zustand j möglich, so liegt ein Fehler vor. In diesem Fall wird eine übliche Fehlerbehandlung vorgenommen (s. unter Fehlerbehandlung).

Ist der Endzustand des Übergangsdiagramms für 〈INDIZ-BEDINGUNG〉 erreicht und zwischenzeitlich sind keine Fehler aufgetreten, so ist die Syntaxanalyse erfolgreich beendet. Die Liste der bereits erkannten Symbole erhält die erkannte Indizbedingung. Nach der erfolgreich beendeten Syntaxanalyse enthält der Strukturstack einen Eintrag, der die Struktur der untersuchten Indizbedingung widerspiegelt. Diese Struktur muß für jede Indizbedingung verwaltet werden, um später während der semantischen Analyse und der Codegenerierung darauf zuzugreifen.

Sind Fehler aufgetreten und der Parser konnte mit Hilfe der Fehler-Recovery-Strategie weitermachen und den Endzustand des Übergangsdiagramms für 〈INDIZBEDINGUNG〉 erreichen, so ist die Syntaxanalyse trotzdem nicht erfolgreich beendet. Dies wird im Übersetzungsprotokoll festgehalten und eine Meldung an die Wissensakquisitionskomponente zur Ausgabe im Meldungsfenster gegeben. Es wird keine semantische Analyse vorgenommen und kein Code generiert. Des weiteren wird die mit Hilfe der Fehler-Recovery erkannte Indizbedingung im Protokoll festgehalten.

### Fehlerbehandlung

Ist in einer Indizbedingung ein Fehler enthalten, so bricht der Parser nicht ab, sondern setzt seine Arbeit fort. Wird im Übergangsdiagramm ein Zustand erreicht, aus dem es keine Kante herausgibt, die das aktuelle Zeichen im Eingabestring verarbeitet, so liegt ein Fehler vor. Dies wird im übersetzungsprotokoll eingetragen, ggf. eine Meldung an die Wissensakquisitionskomponente übergeben und die Vorbereitungen für die Codegenerierung werden eingestellt.

Das Prinzip der panischen Fehler-Recovery ist, solange Eingabezeichen zu überlesen, bis ein synchronisierendes Zeichen in der Eingabe erscheint. Die synchronisierenden Zeichen sind geeignet zu definieren. Im vorliegenden Fall sind dies:
- Terminale an der nachfolgenden Kante im Übergangsdiagramm,
- Elemente aus FIRST(NT), wenn das Nichtterminale NT an der nachfolgenden Kante steht und
- Elemente aus FOLLOW (NT), wenn das Nichtterminale NT das aktuell bearbeitete ist.

Die gestrichenen Eingabezeichen werden in einer Liste, im folgenden als Streichungsliste bezeichnet, gesammelt. Für die Fehler-Recovery ist folgende Strategie implementiert:
Ist das Endesymbol einer Indizbedingung, $, das aktuelle Eingabezeichen und der Endzustand des Übergangsdiagramms für das Startsymbol der Grammatik <INDIZBEDINGUNG> noch nicht erreicht, so ist die aktuelle Streichungsliste im übersetzungsprotokoll festzuhalten und die Syntaxanalyse mit entsprechender Abbruchmeldung im Protokoll und an die Wissensakquisitionskomponente zu beenden. Wenn ein Zustand i erreicht ist, indem das nächste Zeichen der Eingabe nicht verarbeitet werden kann, dann ist für jedes Eingabezeichen a ungleich dem Endesymbol folgendes zu überprüfen:
1. Entspricht das Eingabezeichen a dem Zeichen an der nachfolgenden Kante, dann ist die derzeitige Streichungsliste im Protokoll festzuhalten und normal weiterzumachen, d.h. a wird verarbeitet und in den der Kante folgenden Zustand im Übergangsdiagramm übergegangen.
2. Ist das Eingabezeichen a Element von FIRST (NTₖ) und NT_{K} steht an der nachfolgenden Kante, dann ist die derzeitige Streichungsliste im Protokoll festzuhalten und normal weiter zumachen.
3. Ist das Eingabezeichen a Element von FOLLOW (NTₘ) und NTₘ ist das im derzeitigen Übergangsdiagramm bearbeitete nichtterminale, so wird die aktuelle Streichungsliste im Protokoll festgehalten, das aktuelle Übergangsdiagramm für NTₘ beendet und dies protokolliert und anschließend normal weitergemacht.
4. Ist das Eingabezeichen a sowohl in FIRST(NTₖ) als auch in FOLLOW(NTₘ), so wird wie unter 2. verfahren.
5. Gilt für das Eingabezeichen a) keine der obengenannten Alternativen, so ist a in die Streichungsliste rechts einzufügen und das nächste Eingabezeichen zu betrachten.

Nach der erfolgreich beendeten Syntaxanalyse für die Indizbedingungen sind die Wissensstrukturen insgesamt syntaktisch korrekt.

### Übersetzung der Indizbedingungen in ausführbare LISP-bedingungen

Wurde die Syntaxanalyse der Indizbedingungen erfolgreich beendet, wird für jede Indizbedingung die während der Syntaxanalyse ermittelte und konservierte Struktur in ausführbaren Common Lisp Code übersetzt. Dabei werden folgende Schritte abgearbeitet:
- Umwandlung der Infix- in eine Präfix-Notation,
- anstelle der Parameter und Konstanten selbst sind die Slotzugriffe auf deren jeweilige Meßwert- bzw. Wertslots einzutragen und
- für die Operatoren sind die geeigneten Common Lisp Funktionen einzusetzen.

### Umsetzung der Objekte in die der Modellklassen

Eine graphische Wissensstruktur liegt in Form einer oder mehrerer Dateien vor, die eine Menge von Instanzen der Wissensakquisitionsklassen (WA-Klassen) enthält. Eine ablauffähige Wissensstruktur liegt ebenso in Form einer oder mehrerer Dateien vor, die eine Menge von Instanzen enthält, aber Instanzen der Modellklassen, nicht der WA-Klassen. Die Instanzen in der graphischen Struktur unterscheiden sich von denen der ablauffähigen Struktur zum Teil erheblich. Der auffallendste Unterschied liegt im Graphikanteil der graphischen Strukturinstanzen.

Wurden die vorhergehenden Phasen erfolgreich beendet, so findet jetzt die Codegenerierung, d.h. die Umsetzung der WA-Klassen in die der Modellklassen statt. In Tabelle 10 sind die Bausteintypen der Wissensakquisition und die zugehörigen Modellbausteine aufgelistet.

Tabelle 11 enthält eine Auflistung von Umsetzbedingungen für die WA-Bausteine, für die es mehrere Modellbausteine gibt.

Diese Bedingungen werden überprüft, bevor eine Instanz des WA-Bausteins entsprechend umgesetzt werden kann. Des weiteren wird für jede einzelne Umsetzung überprüft, welche Information aus der WA-Klasseninstanz in die Modellklassen-Instanz zu übernehmen ist und in welcher Art und Weise. Dabei sind die in den Instanzen der WA-Klassen enthaltenen Informationen entsprechend umzusetzen für die Instanzen der Modellklassen. Bei dieser Umsetzung geht die graphische Information verloren.

Die Überprüfung, welcher Typ von Modellbaustein für die Umsetzung zu wählen ist, findet in einer Methode statt, welche jeweils zum WA-Bausteintyp gehört. Für die eindeutig zuordenbaren Typen verhält sich diese Methode passiv, verändert also nichts. Diese Methode wird im folgenden Umsetzer-Methode genannt.

Nachfolgend wird die Umsetzung für den WA-Baustein WAG-Problemknoten etwas detaillierter skizziert. Prinzipiell ist der WAG-Problemknoten die graphische Repräsentation für vier verschiedene, oben angegebene Modellbausteine.

Hier ist für zwei Umsetzungen angegeben, welche Information aus welchen Slots in welcher Weise zu übernehmen ist. Dabei bedeutet in Tabelle 12 der durchgezogene Pfeil (→), daß die Information automatisch übernommen wird, der Doppelpfeil (⇒) γ, daß die Information geeignet zu erzeugen ist und der gepunktete Pfeil (.... 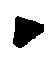 ), daß die Information unverändert, aber explizit zu übernehmen ist (wegen der verschiedenen Packages).

Wie in Tabelle 12 zu sehen ist, wird in beiden Umsetzungen aus der Information im Slot CONNECTIONS sowohl der Eintrag für den Slot EINKANTE als auch für den Slot AUSKANTE der neuen Instanz generiert. Die Einträge für den Slot EINKANTE in der neuen Instanz für Problemknoten.

Es zeigt sich, daß bei einigen Umsetzungen genau dieselbe Information in gleichartiger Weise zu übernehmen ist.

Die Linien der graphischen Wissensstruktur sind nach der Umsetzung nicht mehr vorhanden.

Es gibt in den graphischen Wissensstrukturen zu jedem Wissensmodul ein Verwaltungsobjekt. Auch diese werden geeignet in die Verwaltungsobjekte in den Wissensmodulen der ablauffähigen Wissensstrukturen umgesetzt und dabei die während der Umsetzung gesammelten Verwaltungsinformation mitverwendet. In den neuen Verwaltungsobjekten werden ggf. weitere Informationen, die aus den Wissensstrukturen generiert werden, eingetragen.

Die Dateien der durch Umsetzung entstandene ablauffähige Wissensbasis /M-Wissensmodul erhalten denselben Dateinamen bis auf den Postfix "-G". Das Postfix "-L" wird anstelle des Postfix "-G" eingesetzt und kennzeichnet die ablauffähigen Wissensstrukturen. Sie werden im Subdirectory für die ablauffähige Wissensbasis bzw. M-Wissensmodul abgespeichert.

## Patentansprüche

1. Wissensbasiertes Diagnosesystem mit graphischer Wissensakquisitionskomponente zur interaktiven Fehlerdiagnose in einem technischen System,
a) bei dem zur Wissensakquisition eine erste ablauffähige Programmphase vorgesehen ist, welche zur interaktiven Wissensakquisition durch einen Experten elementare graphische Objekte als Domänenobjekte zur Verfügung stellt, welche Einheiten aus einer dem Diagnosesystem zugrundeliegenden Domäne ausdrücken,
b) bei dem eine Graphgrammatik vorgesehen ist zur Definition von erlaubten graphischen Anordnungen und Verbindungen von mindestens zwei Domänenobjekten,
c) bei dem die Wissensakquisition durch die interaktive graphische Plazierung und Verbindung von Domänenobjekten mit graphischen Verbindungslinien erfolgt, wobei für jede Verbindungslinie ein Kriterium als Übergangsbedingung eingegeben und zugeordnet wird, welches definiert unter welcher Voraussetzung der Übergang zwischen zwei verbundenen Domänenobjekten eintritt,
d) bei dem die graphische Eingabe zur Eingabezeit auf die Einhaltung der Graphgrammatik überprüft wird und nur solche Eingaben erlaubt werden, welche die Graphgrammatik erfüllen,
e) und bei dem die erste Programmphase in einem automatischen Übersetzungsschritt durch einen Compiler in eine zweite ablauffähige Programmphase als Diagnosephase überführt wird, womit die Diagnose des technischen Systems durchgeführt wird.

2. Diagnosesystem nach Anspruch 1, bei dem das Diagnoseproblem in Form einer Baumstruktur unter Verwendung mindestens folgender elementarer graphischer Objekte graphisch dargestellt wird: Wurzel, Knoten, Kante mit Kriterium und Blatt, wobei die Wurzeln das diagnostische Ausgangsproblem darstellen, die Knoten Teilproblemen des Ausgangsproblems, oder Teilproblemen von ihnen übergeordneten Teilproblemen entsprechen, die Kanten mit Kriterien Übergänge zwischen Problemen und ihnen nachgeordneten Teilproblemen repräsentieren und ein Blatt ein Diagnoseergebnis in Form einer Reparaturanleitung, einen Abbruch der Diagnosesitzung oder einen Verweis auf ein komplexeres Teilproblem in Form eines Moduls bedeutet.

3. Wissensbasiertes Diagnosesystem nach einem der vorangehenden Ansprüche, mit folgenden Kriterien:
- Indize, welche eine oder mehrere Indizbedingungen umfassen, für mindestens jedes nachfolgende Teilproblem jedoch jeweils eine, wobei die Indizbedingungen auswertbare Bedingungen sind, welche aus mindestens einer Verknüpfung von meßbaren Systemparametern und/oder Konstanten mit Hilfe von logischen UND-/ODER-Operatoren, Vergleichen und arithmetischen Ausdrücken aufgebaut sind;
- Reihenfolgen, welche eine Abarbeitungsreihenfolge für nachfolgende Teilprobleme definieren.

4. Wissensbasiertes Diagnosesystem nach Anspruch 3, bei dem meßbare Systemparameter des technischen Systems während der Diagnosesitzung beim Übergang von einem Problem zu einem seiner Teilprobleme abgefragt, und nach deren Messung und Eingabe die Indizbedingungen des Indizes ausgewertet werden. wobei das Diagnosesystem auf Basis dieser Auswertungen aus den alternativen Teilproblemen, die zutreffenden auswählt.

5. Diagnosesystem nach einem der vorangehenden Ansprüche, bei dem eine kontextfreie Grammatik vorgesehen ist, welche mindestens festlegt welche Form und welche Bedingungen für Übergangsbedingungen erlaubt sind und bei dem Übergangsbedingungen daraufhin überprüft werden ob sie diese Grammatik erfüllen, wobei nur solche Bedingungen erlaubt werden, die der Grammatik entsprechen.

6. Diagnosesystem nach Anspruch 5, bei dem die Überprüfung beim Übersetzungsschritt erfolgt.

7. Wissensbasiertes Diagnosesystem nach einem der Ansprüche 2 bis 6, bei dem folgende Typen von Knoten auftreten:
- Rücksprungknoten, welche dadurch charakterisiert sind, daß die ihnen nachfolgende Kante ein Kriterium vom Typ Indiz hat, und daß zu diesem Indiz eine Indizbedingung existiert, die das Nichtvorliegen des durch den Rücksprungknoten repräsentierten Problems anzeigt;
- nichtterminale Reparaturknoten, welche komplexer strukturierte Reparaturanleitungen darstellen.

8. Wissensbasiertes Diagnosesystem nach einem der Ansprüche 2 bis 7, bei dem als Blätter folgende Knotentypen auftreten:
- Terminale Reparaturknoten, welche ein Diagnoseergebnis in Form einer Reparaturanleitung repräsentieren, die Anweisungen enthält, die zur Beseitigung der Fehlerursache auszuführen sind;
- Wartungsknoten, welche einen Diagnoseabbruch darstellen, weil das im Diagnosesystem vorhandene Wissen für eine Diagnose des vorliegenden Fehlers nicht ausreicht;
- Wissensmodulknoten, welche auf ein die nächst tiefere Hierarchieebene repräsentierendes Wissensmodul verweisen;
- M-Wissensmodulknoten, welche mehrfach zu verwendende Wissensmodule, M-Wissensmodule genannt, repräsentieren auf die von verschiedenen Stellen in einem graphischen Objekt oder auch von verschiedenen graphischen Objekten aus verwiesen werden kann, die aber nur einmal vorhanden sind.

## Claims

1. Knowledge-based diagnostic system with graphical knowledge-acquisition component for interactive defect diagnosis in a technical system,
a) in which, for knowledge acquisition, a first executable program phase is provided, which makes available for interactive knowledge acquisition by an expert elementary graphical objects as domain objects, which express units from a domain on which the diagnostic system is based,
b) in which a set of grammatical rules for graphics is provided for the definition of allowed graphical arrangements and linkages of at least two domain objects,
c) in which the knowledge acquisition takes place by the interactive graphical placement and linkage of domain objects by graphical linking lines, there being input and assigned as a transition condition for each linking line a criterion which defines under which precondition the transition between two linked domain objects occurs,
d) in which the graphical input for the input time is checked for compliance with the set of grammatical rules for graphics and only those inputs which meet the set of grammatical rules for graphics are allowed,
e) and in which the first program phase is transformed in an automatic compilation step by a compiler into a second executable program phase as a diagnostic phase, whereby the diagnosis of the technical system is carried out.

2. Diagnostic system according to Claim 1, in which the diagnostic problem is graphically represented in the form of a tree structure using at least the following elementary graphical objects: root, node, edge with criterion and leaf, the roots representing the initial diagnostic problem, the nodes corresponding to subproblems of the initial problem, or subproblems of subproblems at a higher level than them, the edges with criteria representing transitions between problems and subproblems at a lower level than them and a leaf signifying a diagnostic result in the form of an instruction for repair, an abnormal termination of the diagnostic session or a reference to a more complex subproblem in the form of a module.

3. Knowledge-based diagnostic system according to one of the preceding claims, having the following criteria:
- indices which comprise one or more index conditions, but for at least each following subproblem they comprise one in each case, the index conditions being evaluable conditions which are made up of at least one logic operation on measurable system parameters and/or constants with the aid of logic AND/OR operators, comparisons and arithmetic expressions;
- sequences which define a processing sequence for following subproblems.

4. Knowledge-based diagnostic system according to Claim 3, in which measurable system parameters of the technical system are enquired during the diagnostic session at the transition from a problem to one of its subproblems, and after their measurement and input the index conditions of the index are evaluated, the diagnostic system selecting from the alternative subproblems the relevant ones on the basis of these evaluations.

5. Diagnostic system according to one of the preceding claims, in which a context-free set of grammatical rules is provided, which establishes at least which form and which conditions for transition conditions are allowed, and in which transition conditions are checked as to whether they meet this set of grammatical rules, only those conditions which meet the grammatical rules being allowed.

6. Diagnostic system according to Claim 5, in which the checking takes place during the compilation step.

7. Knowledge-based diagnostic system according to one of Claims 2 to 6, in which the following types of nodes occur:
- return nodes, which are characterized in that the edge following them has a criterion of the index type, and in that there exists for this index an index condition which indicates the absence of the problem represented by the return node;
- non-terminal repair nodes, which represent more complexly structured instructions for repair.

8. Knowledge-based diagnostic system according to one of Claims 2 to 7, in which the following node types occur as leafs:
- terminal repair nodes, which represent a diagnostic result in the form of an instruction for repair which contains instructions which are to be performed to eliminate the cause of the defect;
- maintenance nodes, which represent an abnormal termination of the diagnosis because the knowledge existing in the diagnostic system is not adequate for a diagnosis of the defect in question;
- knowledge module nodes, which refer to a knowledge module representing the next-lower hierarchical level;
- M knowledge module nodes, which represent knowledge modules to be used multiply, called M knowledge modules, to which reference can be made from various points in a graphical object or else from different graphical objects but of which there is only one.

## Revendications

1. Système diagnostique basé sur la connaissance avec un élément graphique pour l'acquisition de connaissances, destiné au diagnostic interactif d'erreurs dans un système technique,
a) dans lequel une première phase de programme exécutable est prévue pour l'acquisition de connaissances, qui, en vue de l'acquisition interactive de connaissances par un expert, fournit des objets graphiques élémentaires servant d'objets de domaine, lesquels expriment des unités d'un domaine qui est à la base du système diagnostique,
b) dans lequel une grammaire graphique est prévue pour définir des placement et liaisons graphiques autorisées d'au moins deux objets de domaine liés,
c) dans lequel l'acquisition de connaissances s'effectue par le placement et la liaison graphiques interactifs d'objets de domaine au moyen de lignes de liaison graphiques, pour chaque ligne de liaison un critère servant de condition de transition étant entré et attribué, lequel définit sous quelle condition a lieu la transition entre deux objets de domaine,
d) dans lequel la conformité de l'entrée graphique à la grammaire graphique est vérifiée au moment de l'entrée et ne sont autorisées que les entrées qui respectent la grammaire graphique,
e) et dans lequel la première phase de programme est convertie par un compilateur au cours d'une étape de traduction automatique en une deuxième phase de programme exécutable en tant que phase diagnostique, permettant d'effectuer le diagnostic du système technique.

2. Système diagnostique selon la revendication 1, dans lequel le problème diagnostique est représenté sous forme d'une structure arborescente utilisant au moins les objets graphiques élémentaires suivants: racine, noeud, arête avec critère et feuille, les racines représentant le problème diagnostique de départ, les noeuds correspondant à des sous-problèmes du problème de départ ou à des sous-problèmes de sous-problèmes d'ordre supérieur de ceux-ci, les arêtes avec critères représentant des transitions entre les problèmes et leurs sous-problèmes d'ordre inférieur et une feuille signifiant un résultat du diagnostic sous forme d'une instruction de réparation, un abandon de la séance diagnostique ou un renvoi à un sous-problème plus complexe sous forme d'un module.

3. Système diagnostique basé sur la connaissance selon l'une des revendications précédentes, avec les critères suivants:
- des indices comprenant une ou plusieurs conditions d'indice, mais à chaque fois une pour au moins chaque sous-problème d'ordre inférieur, les conditions d'indice étant des conditions analysables composées d'au moins une opération de paramètres système mesurables et/ou de constantes au moyen d'opérateurs ET/OU logiques, de comparaisons et d'expressions arithmétiques ;
- des ordres définissant l'ordre d'exécution des sous-problèmes d'ordre inférieur.

4. Système diagnostique basé sur la connaissance selon la revendication 3, dans lequel des paramètres système mesurables du système technique sont interrogés au cours de la séance diagnostique lors de la transition d'un problème à l'un de ses sous-problèmes et, lorsque ceux-ci sont mesurés et entrés, les conditions d'indice de l'indice sont analysées, le système diagnostique sélectionnant sur la base de ces analyses, parmi les sous-problèmes alternatifs, ceux qui sont pertinents.

5. Système diagnostique selon l'une des revendications précédentes, dans lequel une grammaire acontextuelle est prévue qui détermine au moins la forme et les conditions autorisées des conditions de transition, et dans lequel la conformité des conditions de transition à cette grammaire est vérifiée, n'étant autorisées que les conditions respectant la grammaire.

6. Système diagnostique selon la revendication 5, dans lequel la vérification a lieu dans la phase de traduction.

7. Système diagnostique basé sur la connaissance selon l'une des revendications 2 à 6, dans lequel apparaissent les types de noeud suivants:
- noeuds de retour, caractérisés en ce que l'arête d'ordre inférieur de ceux-ci comporte un critère du type indice et en ce qu'il existe une condition d'indice pour cet indice indiquant l'absence du problème représenté par le noeud de retour ;
- noeuds de réparation non-terminaux représentant des instructions de réparation de structure plus complexe.

8. Système diagnostique basé sur la connaissance selon l'une des revendications 2 à 7, dans lequel apparaissent sous forme de feuilles les types de noeud suivants:
- noeuds de réparation non-terminaux représentant un résultat de diagnostic sous forme d'une instruction de réparation, laquelle comporte des instructions à suivre pour éliminer la cause d'erreurs ;
- noeuds d'entretien représentant un abandon du diagnostic, la connaissance contenue dans le système diagnostique étant insuffisante pour effectuer un diagnostic de l'erreur existante ;
- noeuds de module de connaissances renvoyant à un module de connaissances représentant le niveau hiérarchique immédiatement inférieur ;
- noeuds de module de connaissances M représentant des modules de connaissances à usage multiple, appelés modules de connaissances M, auxquels des renvois peuvent être effectués à partir de différents endroits dans un objet graphique ou aussi à partir de différents objets graphiques, mais qui n'existent qu'une fois.
